# EUROPEAN PATENT APPLICATION

(11) **EP 4 343 511 A1**
(43) Date of publication of application: **27.03.2024**
(21) Application number: 22827283.7
(22) Date of filing: 23.05.2022
(51) Int. Cl.: G06F 3/0481

(54) **SHORTCUT ICON DISPLAY METHOD AND TERMINAL DEVICE**

(30) Priority: 22.06.2021 CN 202110689416
(71) Applicant: Petal Cloud Technology Co., Ltd., Dongguan, Guangdong 523799 (CN)
(72) Inventor: LIU, Xiaopeng, Shenzhen, Guangdong 523799 (CN); BAO, Rui, Shenzhen, Guangdong 523799 (CN); ZHAO, Bin, Shenzhen, Guangdong 523799 (CN); GUO, Zhanwei, Shenzhen, Guangdong 523799 (CN)
(74) Representative: Maiwald GmbH
(86) International application number: PCT/CN2022/094319
(87) International publication number: WO 2022/267786

(57) **Abstract**

Embodiments of this application provide a shortcut icon display method and a terminal device. In the method, in response to an instruction of creating a shortcut icon triggered by a user, a display condition of the shortcut icon is obtained. When the display condition is satisfied, the shortcut icon is created and displayed; or when the display condition is not satisfied, the shortcut icon is removed or prompt information used to remind the user to remove the shortcut icon is displayed. According to this solution, the shortcut icon may be created and displayed when the shortcut icon needs to be displayed, to facilitate a user operation. In addition, the shortcut icon is removed when the shortcut icon does not need to be continuously displayed, so that a resource waste caused by the fact that an invalid shortcut icon continues to stay on a desktop is avoided, and user experience is improved.

## Description

### CROSS-REFERENCE TO RELATED APPLICATIONS

This application claims priority to Chinese Patent Application No. 202110689416.9, filed with the China National Intellectual Property Administration on June 22, 2021 and entitled "SHORTCUT ICON DISPLAY METHOD AND TERMINAL DEVICE", which is incorporated herein by reference in its entirety.

### TECHNICAL FIELD

This application relates to the field of electronic device technologies, and in particular, to a shortcut icon display method and a terminal device.

### BACKGROUND

An application installed on a terminal device can provide various services for a user, and the user may browse content or perform a related operation on a display page of the application. As the application supports increasing functions, the terminal device can display, on a display interface only after the user performs a plurality of operations, a page that the user wants to view, which is complex and results in poor viewing experience of the user.

To resolve the foregoing problem, the user may set a shortcut icon for a display page of a commonly used function in the application, and the shortcut icon may be displayed on a desktop of the terminal device. After the user taps the shortcut icon, the terminal device may directly display a display page corresponding to the shortcut icon, without a need for the user to start the application to perform an operation. However, at present, after the user triggers generation of the shortcut icon, the user needs to delete the shortcut icon by performing an operation again; otherwise, the shortcut icon keeps displayed on the desktop.

In conclusion, a current shortcut icon display method is not flexible enough.

### SUMMARY

This application provides a shortcut icon display method and a terminal device, to flexibly display a shortcut icon.

According to a first aspect, an embodiment of this application provides a shortcut icon display method. The method includes:
in response to an instruction of creating a shortcut icon triggered by a user, obtaining a display condition of the shortcut icon; and when the display condition is satisfied, creating and displaying the shortcut icon; or when the display condition is not satisfied, removing the shortcut icon or displaying prompt information used to remind the user to remove the shortcut icon.

In the foregoing method, after the user triggers the instruction to create the shortcut icon, the display condition of the shortcut icon may be obtained, and the shortcut icon is created or removed based on the display condition, so that the shortcut icon can be flexibly managed. The shortcut icon is created and displayed when the shortcut icon needs to be displayed, to facilitate a user operation. In addition, the shortcut icon is removed when the shortcut icon no longer needs to be displayed, so that a resource waste caused by the fact that an invalid shortcut icon continues to stay on a desktop is avoided, and user experience is improved.

In a possible design, the display condition includes at least one of the following: a time parameter for displaying the shortcut icon, a geographical location parameter for displaying the shortcut icon, and a specified condition corresponding to user data during display of the shortcut icon.

According to this design, the display condition may be the time parameter, the geographical location parameter, or the specified condition corresponding to the user data. Therefore, various display conditions can be provided to meet display requirements of various shortcut icons.

In a possible design, the time parameter for displaying the shortcut icon includes a time point for displaying the shortcut icon, a time period for displaying the shortcut icon, or a time cycle for displaying the shortcut icon.

In a possible design, when the display condition includes the time parameter for displaying the shortcut icon, determining that the display condition is satisfied includes: determining that current time reaches the time point for displaying the shortcut icon; or determining that current time is within the time period or the time cycle for displaying the shortcut icon.

According to the foregoing design, when the display condition includes the time parameter for displaying the shortcut icon, the display condition may be the time point, the time period, or the time cycle for displaying the shortcut icon. Therefore, display time of the shortcut icon may be monitored, and when the current time satisfies the time parameter, the shortcut icon is displayed, or when the current time does not satisfy the time parameter, the shortcut icon is removed. In this way, the shortcut icon is flexibly displayed based on the time parameter.

In a possible design, when the display condition includes the geographical location parameter for displaying the shortcut icon, determining that the display condition is satisfied includes: determining that a current geographical location of a terminal device is within a geographical region corresponding to the geographical location parameter.

According to this design, the display condition may be the geographical location parameter for displaying the shortcut icon. The geographical location parameter may be used to determine the geographical region for displaying the shortcut icon, to determine whether to display the shortcut icon based on the current location of the terminal device and the geographical location parameter, and may be used to display a shortcut icon related to a geographical location, for example, a shortcut icon of an application such as a traffic card. This is user-friendly.

In a possible design, when the display condition includes the specified condition corresponding to the user data during display of the shortcut icon, determining that the display condition is satisfied includes: obtaining the user data, and determining that the user data satisfies the specified condition corresponding to the user data.

According to this design, the display condition may be the specified condition corresponding to the user data. For example, the specified condition corresponding to the user data may be that a sign-in operation is completed or membership points are greater than a specified threshold. Whether to display the shortcut icon is determined based on the user data and the specified condition corresponding to the user data. Therefore, the shortcut icon is displayed when the user needs to operate a page related to the user data, and the shortcut icon is removed after the user data satisfies the specified condition. In this way, a resource waste and impact on viewing experience of the user that are caused by the fact that an invalid shortcut icon continues to stay are avoided.

In a possible design, the obtaining a display condition of the shortcut icon includes: obtaining a preset display condition of the shortcut icon; generating the display condition according to a setting instruction input by the user; or sending a request message to a server, and receiving the display condition returned by the server.

According to this design, a plurality of manners of obtaining the shortcut icon are provided, for example, presetting the display condition, generating the display condition according to the setting instruction input by the user, or receiving the display condition sent by the server.

In a possible design, the creating and displaying the shortcut icon includes: obtaining a display parameter of the shortcut icon, and creating and displaying the shortcut icon based on the display parameter.

In a possible design, the obtaining a display parameter of the shortcut icon includes: obtaining a preset display parameter of the shortcut icon; generating the display parameter according to a setting instruction entered by the user; or sending a request message to a server, and receiving the display parameter returned by the server.

In a possible design, the display parameter includes at least one of the following content: an identifier of the shortcut icon, a name of the shortcut icon, a display style of the shortcut icon, a behavior definition of the shortcut icon, a display location of the shortcut icon, and a display status of the shortcut icon. The behavior definition of the shortcut icon indicates a function enabled or a page displayed after the shortcut icon is triggered.

In a possible design, the display style of the shortcut icon includes at least one of the following content: a size, a shape, a color, an animation, and a video of the shortcut icon.

According to the foregoing design, the shortcut icon may be created and displayed based on the display parameter, and the display parameter may include parameters such as the display style, the behavior definition, and the display location. Therefore, various shortcut icons are flexibly displayed, and user experience is improved.

In a possible design, when the display condition is time for displaying the shortcut icon, and the display style of the shortcut icon includes a countdown animation, the method further includes: displaying the countdown animation on the shortcut icon within specified duration before end time corresponding to the shortcut icon. The time for displaying the shortcut icon includes the end time corresponding to the shortcut icon. The specified duration is duration of the countdown animation.

According to the foregoing design, when a shortcut icon with a time limit is displayed, a countdown animation may be displayed on the shortcut icon within specified duration before end time corresponding to the shortcut icon, to remind the user.

According to a second aspect, an embodiment of this application provides a shortcut icon display apparatus, including units configured to perform the steps in any one of the foregoing aspects.

According to a third aspect, an embodiment of this application provides a terminal device, including at least one processor. The at least one processor is coupled to at least one memory. The at least one processor is configured to read a computer program stored in the at least one memory, to perform the method provided in any one of the foregoing aspects.

According to a fourth aspect, an embodiment of this application further provides a computer program. When the computer program is run on a computer, the computer is enabled to perform the method provided in any one of the foregoing aspects.

According to a fifth aspect, an embodiment of this application further provides a computer-readable storage medium. The computer-readable storage medium stores a computer program. When the computer program is executed by a computer, the computer is enabled to perform the method provided in any one of the foregoing aspects.

According to a sixth aspect, an embodiment of this application further provides a chip. The chip is configured to read a computer program stored in a memory, to perform the method provided in any one of the foregoing aspects.

According to a seventh aspect, an embodiment of this application further provides a chip system. The chip system includes a processor, configured to support a computer apparatus in implementing the method provided in any one of the foregoing aspects. In a possible design, the chip system further includes a memory. The memory is configured to store a program and data that are necessary for the computer apparatus. The chip system may include a chip, or may include a chip and another discrete device.

### BRIEF DESCRIPTION OF DRAWINGS

FIG. 1 is a schematic diagram of triggering, by a user, an instruction of creating a shortcut icon;
FIG. 2 is a schematic diagram of displaying a shortcut icon on a desktop of a terminal device;
FIG. 3 is a schematic diagram of a structure of a terminal device according to an embodiment of this application;
FIG. 4 is a block diagram of a software structure of a terminal device according to an embodiment of this application;
FIG. 5 is a schematic diagram of an application scenario to which a shortcut icon display method is applicable according to an embodiment of this application;
FIG. 6 is a flowchart of a shortcut icon display manner according to an embodiment of this application;
FIG. 7A to FIG. 7D are a schematic diagram of a display location of a shortcut icon according to an embodiment of this application;
FIG. 8 is a schematic diagram of displaying a shortcut icon on a first screen of a terminal device according to Example 1 of this application;
FIG. 9 is a schematic diagram of displaying a shortcut icon with countdown effect on a first screen of a terminal device according to Example 1 of this application;
FIG. 10A to FIG. 10D are a schematic diagram of displaying different shortcut icons by a terminal device in different time cycles according to Example 2 of this application;
FIG. 11A to FIG. 11E are a schematic diagram of triggering creation of a shortcut icon, displaying the shortcut icon, and removing the shortcut icon according to Example 3 of this application;
FIG. 12A to FIG. 12D are a schematic diagram of creating different shortcut icons based on a current geographical location of a terminal according to Example 4 of this application;
FIG. 13A to FIG. 13C are a schematic diagram of displaying a shortcut icon and removing the shortcut icon according to Example 5 of this application;
FIG. 14 is a schematic diagram of a structure of a shortcut icon display apparatus according to an embodiment of this application; and
FIG. 15 is a schematic diagram of a structure of a terminal device according to an embodiment of this application.

### DESCRIPTION OF EMBODIMENTS

For ease of understanding embodiments of this application, terms related to embodiments of this application are described below.

A shortcut icon is an icon that is on a terminal device and that can be tapped to quickly enter a shortcut entry of a specified page or a specified function in an application provided by the device. After detecting a tap operation triggered by a user on the shortcut icon, the terminal device may quickly display a display page corresponding to the shortcut icon. For example, after the user taps a shortcut icon of a sign-in activity on the APP, the terminal device starts the APP, and directly jumps to a display page of the sign-in activity, to facilitate a user operation. The application provided by the terminal device may be an independent application or an integrated application (for example, a specific function-level application) pre-installed on the device, or may be a third-party application installed by the user, or the like.

The application installed on the terminal device can provide various services for the user, and the user may browse content or perform a related operation on a display page of the application. As the application supports increasing functions, the terminal device can display, on a display interface only after the user performs a plurality of operations, a page that the user wants to view, which is complex and results in poor viewing experience of the user.

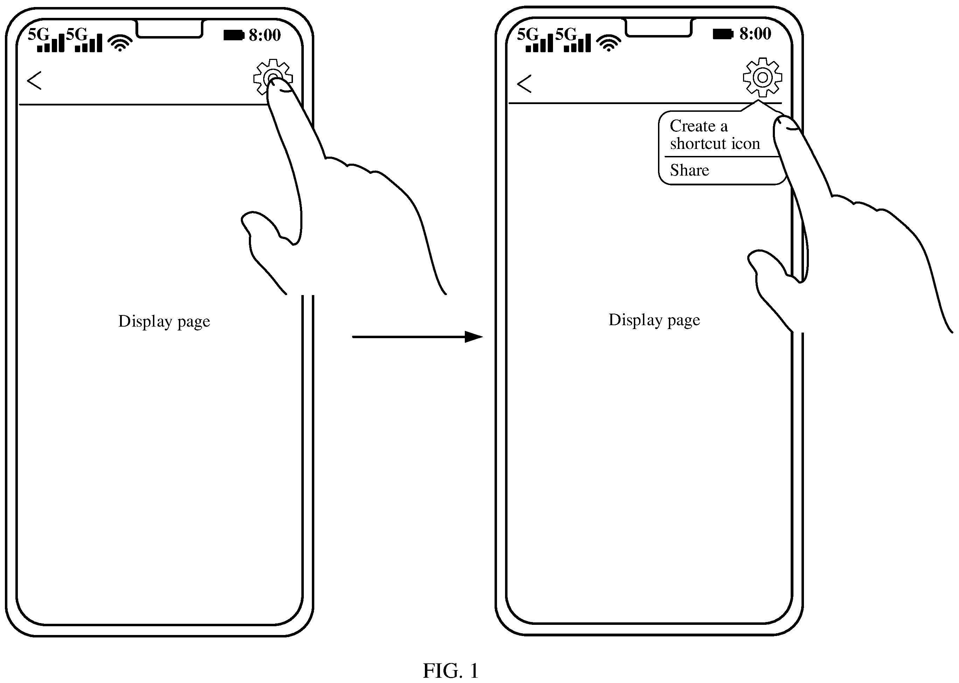

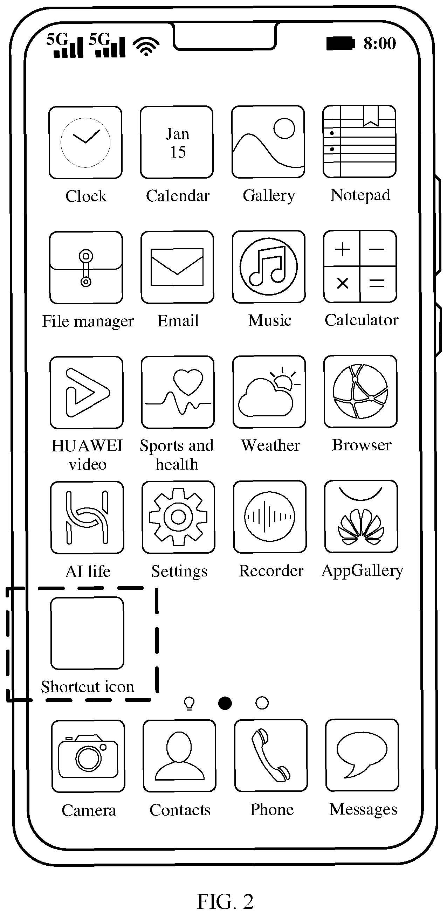

The user may set a shortcut icon for a display page of a common function in the application, to resolve the foregoing problem. For example, FIG. 1 shows the display page of the application displayed on a display of the terminal device. The user may tap a setting button on the display page shown in FIG. 1, and select "Create a shortcut icon". The terminal device obtains a target parameter of the current display page, and creates a shortcut icon corresponding to the current display page. As shown in FIG. 2, the terminal device may display the shortcut icon on a desktop. After the user taps the shortcut icon on the desktop, the terminal device may start the APP, and directly display the display page corresponding to the shortcut icon, so that the user can conveniently view the display page or perform an interactive operation. It should be noted that the foregoing shortcut icon creation manner and the manner of displaying the display page corresponding to the shortcut icon are both examples. This is not limited in embodiments of this application.

A system desktop launcher (launcher) of the terminal device may manage icons of applications displayed on the desktop of the terminal device, for example, create an application icon, delete an application icon, or change a location of an application icon. Similarly, the launcher may also manage the shortcut icon. For example, after the terminal device detects an instruction triggered by the user to create a shortcut icon, the launcher may create the shortcut icon based on an obtained target parameter. After the terminal device detects an instruction triggered by the user to remove a shortcut icon, the launcher may remove the shortcut icon displayed on the desktop. For example, the user may operate the shortcut icon displayed on the desktop to trigger the instruction to remove the shortcut icon. Alternatively, the user may trigger starting of the APP, and perform an operation on the display page of the APP to remove the shortcut icon corresponding to the APP. To be specific, existing shortcut icon management requires the user to trigger a related instruction. Otherwise, the shortcut icon keeps displayed on the desktop of the terminal device. Even if the display page corresponding to the shortcut icon is inaccessible, when the user does not trigger the instruction to remove the shortcut icon, the shortcut icon still occupies a desktop resource to be continuously displayed. In conclusion, a current shortcut icon display method is not flexible enough, and viewing experience of the user is poor.

Based on the foregoing problem, an embodiment of this application provides a shortcut icon display method, to flexibly display the shortcut icon. In the shortcut icon display method provided in this embodiment of this application, in response to the instruction of creating the shortcut icon triggered by the user, the terminal device obtains a display condition of the shortcut icon, and when the display condition is satisfied, creates and displays the shortcut icon, or when the display condition is not satisfied, removes the shortcut icon or displays prompt information used to remind the user to remove the shortcut icon.

It may be understood that embodiments of this application may be applied to a mobile phone, a tablet computer, a wearable device (for example, a watch, a wristband, a helmet, or a headset), a vehicle-mounted device, an augmented reality (augmented reality, AR)/virtual reality (virtual reality, VR) device, a notebook computer, an ultra-mobile personal computer (ultra-mobile personal computer, UMPC), a netbook, a personal digital assistant (personal digital assistant, PDA), a smart home device (for example, a smart television, a smart speaker, or a smart camera), or another terminal device.

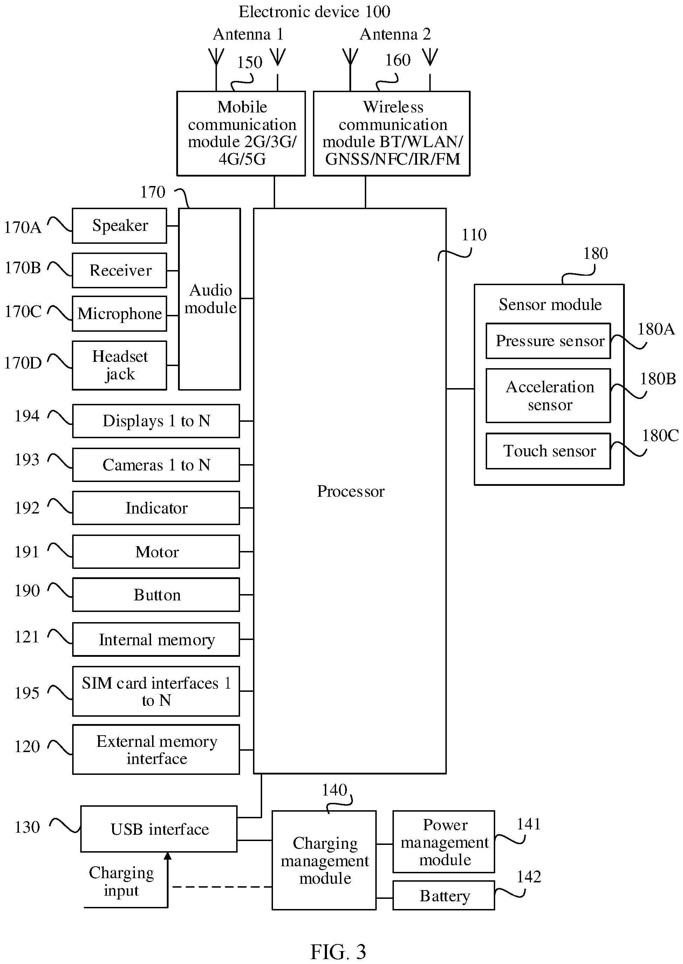

FIG. 3 is a schematic diagram of a structure of a terminal device 100 according to an embodiment of this application. As shown in FIG. 3, the terminal device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be separate devices, or may be integrated in one or more processors. The controller may be a nerve center and a command center of the terminal device 100. The controller may generate an operation control signal based on an instruction operation code and a timing signal, to implement control on instruction fetching and execution. A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor 110 may directly invoke the instructions or the data from the memory. This avoids repeated access, reduces a waiting time of the processor 110, and improves system efficiency.

The USB interface 130 is an interface that conforms to the USB standard specification, and may be specifically a mini USB interface, a micro USB interface, a USB Type-C interface, or the like. The USB interface 130 may be configured to connect a charger to charge the terminal device 100, and may also be configured to transmit data between the terminal device 100 and a peripheral device. The charging management module 140 is configured to receive a charging input from the charger. The power management module 141 is configured to connect the battery 142, the charging management module 140, and the processor 110. The power management module 141 receives an input of the battery 142 and/or the charging management module 140, and supplies power to the processor 110, the internal memory 121, an external memory, the display 194, the camera 193, the wireless communication module 160, and the like.

A wireless communication function of the terminal device 100 may be implemented through the antenna 1, the antenna 2, the mobile communication module 150, the wireless communication module 160, the modem processor, the baseband processor, and the like. The antenna 1 and the antenna 2 are configured to transmit and receive an electromagnetic wave signal. Each antenna in the terminal device 100 can be configured to cover one or more communication frequency bands. Different antennas may be further multiplexed, to improve antenna utilization. For example, the antenna 1 may be multiplexed as a diversity antenna in a wireless local area network. In some other embodiments, the antenna may be used in combination with a tuning switch.

The mobile communication module 150 may provide a solution, applied to the terminal device 100, to wireless communication including 2G, 3G, 4G, 5G, and the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering and amplification on the received electromagnetic wave, and transmit a processed electromagnetic wave to the modem processor for demodulation. The mobile communication module 150 may further amplify a signal obtained by the modem processor through modulation, and convert the signal into an electromagnetic wave through the antenna 1 for radiation. In some embodiments, at least some function modules of the mobile communication module 150 may be disposed in the processor 110. In some embodiments, at least some function modules of the mobile communication module 150 may be disposed in a same device as at least some modules of the processor 110.

The wireless communication module 160 may provide a solution, applied to the terminal device 100, to wireless communication including a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 160 may be one or more devices integrating at least one communication processing module. The wireless communication module 160 receives an electromagnetic wave through the antenna 2, performs frequency modulation and filtering processing on the electromagnetic wave signal, and sends a processed signal to the processor 110. The wireless communication module 160 may further receive a to-be-sent signal from the processor 110, perform frequency modulation and amplification on the signal, and convert the signal into an electromagnetic wave through the antenna 2 for radiation.

In some embodiments, in the terminal device 100, the antenna 1 and the mobile communication module 150 are coupled, and the antenna 2 and the wireless communication module 160 are coupled, so that the terminal device 100 may communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The display 194 is configured to display a display interface of an application, for example, display a desktop of the terminal device 100. The desktop may include an icon of the application installed on the terminal device 100, a created shortcut icon, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini-LED, a micro-LED, a Micro-OLED, a quantum dot light-emitting diode (quantum dot light-emitting diode, QLED), or the like. In some embodiments, the terminal device 100 may include one or N displays 194, where N is a positive integer greater than 1.

The camera 193 is configured to capture a static image or a video. An optical image of an object is generated through a lens, and is projected onto a photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP for conversion to a digital image signal. The ISP outputs the digital image signal to the DSP for processing. The DSP converts the digital image signal into an image signal in a format such as standard RGB or YUV. In some embodiments, the terminal device 100 may include one or N cameras 193, where N is a positive integer greater than 1.

The internal memory 121 may be configured to store computer-executable program code. The executable program code includes instructions. The processor 110 performs various function applications and data processing of the terminal device 100 by running the instructions stored in the internal memory 121. The internal memory 121 may include a program storage region and a data storage region. The program storage region may store an operating system, software code of at least one application, and the like. The data storage region may store data (for example, a shot image or a recorded video) generated during use of the terminal device 100, and the like. In addition, the internal memory 121 may include a high-speed random access memory, and may further include a non-volatile memory, for example, at least one magnetic disk storage device, a flash memory device, and a universal flash storage (universal flash storage, UFS).

The external memory interface 120 may be configured to connect an external memory card, for example, a micro SD card, to extend a storage capability of the terminal device. The external memory card communicates with the processor 110 through the external memory interface 120, to implement a data storage function. For example, files such as pictures or videos are stored in the external memory card.

The terminal device 100 may implement an audio function such as music playing or recording through the audio module 170, the speaker 170A, the receiver 170B, the microphone 170C, the headset jack 170D, the application processor, and the like.

The sensor module 180 may include a pressure sensor 180A, an acceleration sensor 180B, a touch sensor 180C, and the like.

The pressure sensor 180A is configured to sense a pressure signal, and may convert the pressure signal into an electrical signal. In some embodiments, the pressure sensor 180A may be disposed in the display 194.

The touch sensor 180C is also referred to as a "touch panel". The touch sensor 180C may be disposed in the display 194. The touch sensor 180C and the display 194 form a touchscreen, which is also referred to as a "touch screen". The touch sensor 180C is configured to detect a touch operation performed on or near the touch sensor. The touch sensor may transfer the detected touch operation to the application processor, to determine a type of a touch event. A visual output related to the touch operation may be provided on the display 194. In some other embodiments, the touch sensor 180C may alternatively be disposed on a surface of the terminal device 100 at a location different from that of the display 194. For example, in this embodiment of this application, a user may tap a specified region on the touchscreen to trigger an instruction to create a shortcut icon.

The button 190 includes a power button, a volume button, and the like. The button 190 may be a mechanical button, or may be a touch button. The terminal device 100 may receive a button input, and generate a button signal input related to user setting and function control of the terminal device 100. The motor 191 may generate a vibration prompt. The motor 191 may be configured for vibration alerts for incoming calls, and may be further configured for touch vibration feedback. For example, touch operations on different applications (such as photographing and audio playing) may correspond to different vibration feedback effects. The touch vibration feedback effect may be further customized. The indicator 192 may be an indicator light, and may be configured to indicate a charging status and a power change, or may be configured to indicate a message, a missed call, a notification, and the like. The SIM card interface 195 is configured to connect a SIM card. The SIM card may be inserted into the SIM card interface 195 or removed from the SIM card interface 195, to implement contact with or separation from the terminal device 100.

It may be understood that the components shown in FIG. 3 do not constitute a specific limitation on the terminal device 100. The terminal device may further include more or fewer components than those shown in the figure, some components are combined, some components are split, or a different component arrangement is used. In addition, a combination/connection relationship between the components in FIG. 3 may also be adjusted and modified.

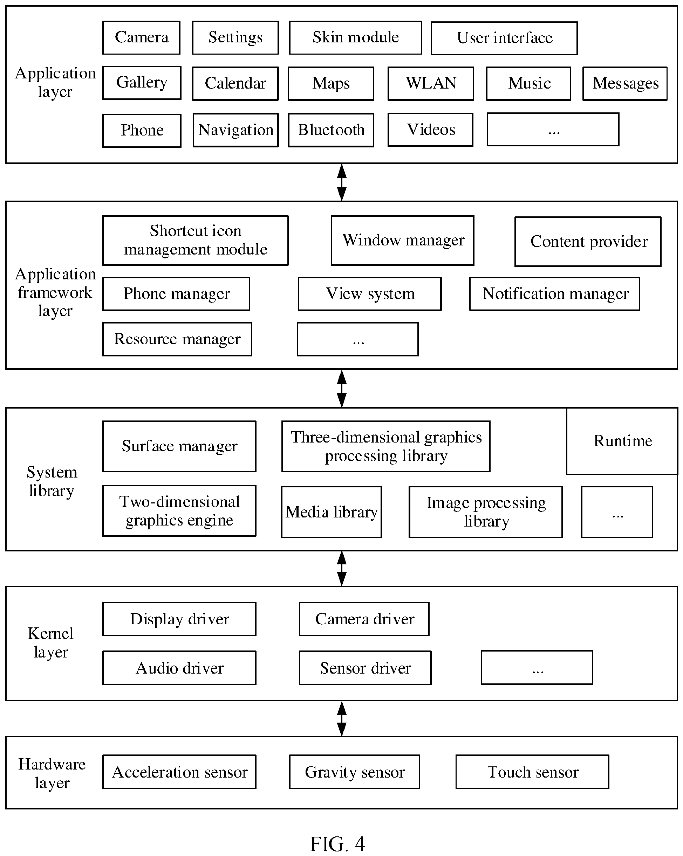

FIG. 4 is a block diagram of a software structure of a terminal device according to an embodiment of this application. As shown in FIG. 4, the software structure of the terminal device may be a layered architecture. For example, software may be divided into several layers, and each layer has a clear role and task. The layers communicate with each other through a software interface. In some embodiments, an operating system is divided into four layers: an application layer, an application framework layer (framework, FWK), a runtime and system library layer, and a kernel layer from top to bottom.

The application layer may include a series of application packages. As shown in FIG. 4, the application layer may include Camera, Settings, a skin module, a user interface (user interface, UI), a third-party application, and the like. The third-party application may include Gallery, Calendar, Phone, Maps, Navigation, WLAN, Bluetooth, Music, Videos, Messages, and the like.

The application framework layer provides an application programming interface (application programming interface, API) and a programming framework for the application at the application layer. The application framework layer may include some predefined functions. As shown in FIG. 4, the application framework layer may include a shortcut icon management module, a window manager, a content provider, a view system, a phone manager, a resource manager, a notification manager, and the like.

The shortcut icon management module is configured to manage a shortcut icon displayed on the terminal device, for example, create the shortcut icon, remove the shortcut icon, and monitor whether the shortcut icon satisfies a display condition.

The window manager is configured to manage a window program. The window manager may obtain a display size, determine whether there is a status bar, lock a screen, take a screenshot, and the like. The content provider is configured to store and obtain data, and enable these data to be accessible to the application. The data may include a video, an image, audio, calls that are made and received, browsing history and bookmarks, a phonebook, and the like.

The view system includes a visual control, for example, a control for displaying text and a control for displaying pictures. The view system may be configured to construct an application. A display interface may include one or more views. For example, a display interface including an SMS message notification icon may include a view for displaying text and a view for displaying pictures.

The phone manager is configured to provide a communication function of the terminal device, for example, management of a call status (including answering, declining, and the like).

The resource manager provides various resources for applications, for example, localized strings, icons, images, layout files, and video files.

The notification manager enables an application to display notification information in the status bar, which may be used to convey a notification-type message and may automatically disappear after a short stay without user interaction. For example, the notification manager is configured to notify download completion or as a message reminder. The notification manager may alternatively be a notification that appears in the status bar at the top of the system in a form of a chart or scroll bar text, such as a notification for an application running in the background, or a notification that appears on a screen in a form of a dialog window. For example, text information is displayed in the status bar, an announcement is given, the terminal device vibrates, or an indicator light blinks.

Runtime may include a kernel library and a virtual machine. The runtime is responsible for scheduling and managing the operating system.

The kernel library includes two parts: one part is a function that needs to be invoked by a Java language, and the other part is a kernel library of the operating system. The application layer and the application framework layer run on the virtual machine. The virtual machine executes Java files at the application layer and the application framework layer as binary files. The virtual machine is configured to implement functions such as object lifecycle management, stack management, thread management, security and exception management, and garbage collection.

A system library may include a plurality of function modules, for example, a surface manager (surface manager), a media library (media library), a three-dimensional graphics processing library (for example, OpenGL ES), a two-dimensional graphics engine (for example, SGL), and an image processing library.

The surface manager is configured to manage a display subsystem and provide fusion of 2D and 3D layers for a plurality of applications.

The media library supports playback and recording in a plurality of common audio and video formats, as well as static image files and the like. The media library may support a plurality of audio and video encoding formats, such as MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

In some embodiments, the three-dimensional graphics processing library may be configured to draw a three-dimensional motion trajectory image, and the 2D graphics engine may be configured to draw a two-dimensional motion trajectory image.

The kernel layer is a layer between hardware and software. The kernel layer includes at least a display driver, a camera driver, an audio driver, and a sensor driver.

The hardware layer may include various sensors, such as an acceleration sensor, a gravity sensor, and a touch sensor.

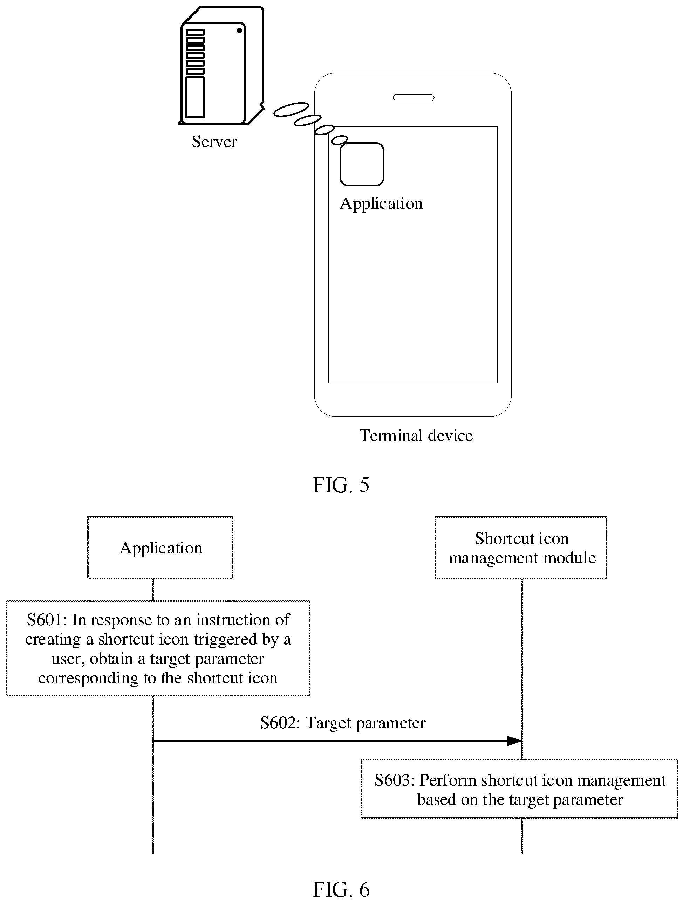

FIG. 5 is a schematic diagram of an application scenario to which the shortcut icon display method is applicable according to an embodiment of this application. As shown in FIG. 5, the scenario includes a terminal device and a server. The server may be a server corresponding to an application installed on the terminal device. The application installed on the terminal device may provide a local service for a user by interacting with the server.

When browsing a display page of the application by using the terminal device, a user may choose, by using a setting option on the display page, to create a shortcut icon for the currently browsed page. For example, refer to a manner in which the user triggers creation of the shortcut icon on the display page of the application shown in FIG. 1. Certainly, the manner of triggering creation of the shortcut icon is not limited thereto. For example, the icon may be created by using a gesture, or by triggering a pop-up selection menu by touching and holding. This is not limited in this embodiment of this application.

The application on the terminal device obtains, from the server in response to an instruction of creating the shortcut icon triggered by the user, a target parameter of the shortcut icon corresponding to the current display page on the terminal device. The target parameter may include different display conditions and a display parameter of the shortcut icon corresponding to each display condition. The terminal device may create the shortcut icon based on the obtained target parameter. The terminal device may further monitor the shortcut icon based on the target parameter. For example, the target parameter may include a display condition of the shortcut icon, for example, the shortcut icon is displayed at 9:00 to 12:00 on Monday. In this case, when detecting that it is 9:00 on Monday, the terminal device creates a shortcut and displays the shortcut on a desktop; and when detecting that it is 12:00 on Monday, the terminal device removes the shortcut from the desktop.

Based on the application scenario shown in FIG. 5, the following further describes the shortcut icon display method provided in embodiments of this application.

In an optional implementation of this embodiment of this application, the shortcut icon on the terminal device may be managed by a shortcut icon management module in the terminal device. For example, the shortcut icon management module may create, display, update, or remove the shortcut icon. During specific implementation, the shortcut icon management module in the terminal device may interact with the application on the terminal device to implement the shortcut icon display method provided in embodiments of this application. FIG. 6 is a flowchart of a shortcut icon display manner according to an embodiment of this application. The manner includes the following steps.

S601: In response to the instruction of creating the shortcut icon triggered by the user, the application on the terminal device obtains the display condition of the shortcut icon.

Optionally, the user may tap a shortcut icon creation button on a target page in the application, to trigger an instruction to create a shortcut icon corresponding to the target page. The user may alternatively trigger, by using a voice input control instruction or the like, the instruction to create the shortcut icon. For example, the user may trigger, by using a voice input control instruction, creation of a shortcut icon corresponding to a tool or a function in the application. Certainly, another instruction that can be supported by the terminal device and that triggers creation of the shortcut icon is still applicable to this embodiment of this application. This is not limited in this embodiment of this application.

In an optional implementation, when obtaining the display condition of the shortcut icon, the application on the terminal device may obtain the target parameter corresponding to the shortcut icon. The target parameter may include the display condition, and may further include a display parameter corresponding to the display condition. Specifically, the application may send a target parameter request message to the server corresponding to the application, to obtain, from the server, the target parameter used to create the shortcut icon. Alternatively, the application may generate the target parameter based on locally stored data. For example, for some functions or pages commonly used by the user, a local storage of the terminal device may store related parameters of these functions or pages. After the user triggers the instruction to create the shortcut icon, the terminal device generates the target parameter based on a related parameter in the local storage. Alternatively, after the user triggers the instruction to create the shortcut icon, the terminal device may further provide a shortcut icon customization function. The user may customize a name, the display condition, a display style, and the like of the shortcut icon. When obtaining the target parameter, the application may generate the target parameter based on each parameter of the shortcut icon customized by the user.

In an optional embodiment of this application, the target parameter may include different display conditions and display parameters corresponding to the different display conditions. The display parameter indicates display content of the shortcut icon and a processing behavior corresponding to the shortcut icon. Optionally, the display parameter may include some or all of parameters such as an identifier of the shortcut icon, the name of the shortcut icon, the display style of the shortcut icon, a behavior definition of the shortcut icon, a display location of the shortcut icon, and a display status of the shortcut icon. For example, Table 1 shows each parameter that may be included in the target parameter.

**Table 1**

| Attribute | Type | Description | |
|---|---|---|---|
| ID | String | Identifier of a shortcut icon | |
| condition | Condition[] | Display condition of the shortcut icon | |
| sLabel | String | Name of the shortcut icon | Brief description |
| lLabel | String | | Detailed description |
| icon | Icon | Display style of the shortcut icon | |
| intent | Intent | Behavior definition of the shortcut icon | |
| locations | Location | Display location of the shortcut icon | |
| status | boolean | Display status of the shortcut icon | |
| | | true: displayed | |
| | | false: not displayed | |

The following separately describes each parameter that may be included in the target parameter.

The display condition of the shortcut icon may be used by the terminal device to create and display the shortcut icon, and monitor whether the shortcut icon is invalid. Optionally, the display condition of the shortcut icon may include a time parameter for displaying the shortcut icon, a geographical location parameter, a specified condition corresponding to user data, and the like. The display condition of the shortcut icon may be a pre-configured display condition, or may be a display condition customized by the user, for example, a display condition of the shortcut icon input by the user when the user triggers the instruction to create the shortcut icon.

Optionally, the time parameter for displaying the shortcut icon may be a time point, a time period, or a time cycle at which or in which the shortcut icon needs to be displayed. The time point or the time period may be a specified time point or a specified time period. For example, the time period may be 0:00 to 12:00 on May 1. The time cycle may be, for example, 9:00 to 12:00 every day. For example, the time cycle for displaying the shortcut icon is 9:00 to 12:00 every day. The terminal device creates and displays the shortcut icon at 9:00 every day on a display, and removes the shortcut icon at 12:00 every day. Alternatively, the time cycle may be, for example, a natural day, a natural week, a natural month, a natural year, or a specified quantity of days. For example, Table 2 shows a parameter that may be included in the display condition of the shortcut icon when the display condition of the shortcut icon is the time parameter for displaying the shortcut icon.

**Table 2**

| Attribute | Type | Description |
|---|---|---|
| periodMode | Date | Cycle type: |
| | | periodMode=1 indicates a time cycle |
| | | periodMode=2 indicates a specified time period |
| period | Data | For a cycle length of periodMode=1: |
| | | Period=1 indicates that the cycle is a natural day |
| | | Period=2 indicates that the cycle is a natural week |
| | | Period=3 indicates that the cycle is a natural month |
| | | Period=4 indicates that the cycle is a natural year |
| | | Period=5 indicates that the cycle is a specified quantity of days |
| | | ... |
| periodNum | Int | Specified quantity of days when Period=5 |
| timePeriods | TimePeriod[] | Specified time period when periodMode=2 |

The geographical location parameter for displaying the shortcut icon may be boundary information of a geographical location at which the shortcut icon needs to be displayed. The geographical location parameter may correspond to a geographical region in which the shortcut icon needs to be displayed. For example, when the user moves with the terminal device, the terminal device creates and displays the shortcut icon on the display when determining that a current geographical location is within the geographical region corresponding to the geographical location parameter, and removes the shortcut icon when determining that the user leaves the geographical region corresponding to the geographical location parameter with the terminal device.

When the display condition of the shortcut icon is the specified condition corresponding to the user data, for example, when the shortcut icon is a shortcut icon for the target page, and the target page is a "sign-in" activity page in the application, the display condition of the shortcut icon may be that the shortcut icon is displayed when the user does not perform a sign-in operation within specified time, or the shortcut icon is removed when the user has performed a sign-in operation within specified time. The specified time may be, for example, one day. For another example, the shortcut icon is a shortcut icon for the target page, the target page is an activity page in the application, and this activity requires that a quantity of times that the user accesses the activity page in a specified time period is greater than a specified value. In this case, the display condition of the shortcut icon may be that the shortcut icon is displayed when the quantity of times that the user accesses the activity page in the specified time period is less than or equal to the specified value, or the shortcut icon is removed when the quantity of times that the user accesses the activity page in the specified time period is greater than the specified value. It may be understood that the specified condition corresponding to the user data may alternatively be a specified condition corresponding to data such as a membership point of the user in the application and a quantity of times of task completion. This is not limited in this embodiment of this application.

In addition, when the display condition of the shortcut icon is the specified condition corresponding to the user data, the display condition of the shortcut icon may further include a user data query address link. Therefore, after receiving the target parameter, the shortcut icon management module may query the user data based on the user data query address link, to monitor the shortcut icon based on the display condition of the shortcut icon.

Optionally, the display condition of the shortcut icon may further include permanent expiration time of the shortcut icon. After determining that current time reaches the permanent expiration time, the terminal device removes the shortcut icon and no longer creates the shortcut icon.

The name of the shortcut icon may include a brief description name and/or a detailed description name. For example, a description name whose character quantity is greater than a specified threshold is the detailed description name, and a description name whose character quantity is less than or equal to the specified threshold is the brief description name. When creating the shortcut icon, the terminal device may choose to display the brief description name or the detailed description name based on a size of a display region corresponding to the shortcut icon.

The display style of the shortcut icon may include content such as a size, a shape, a color, an animation, and a video of the shortcut icon. The animation or the video may be an animation or a video played in the display region corresponding to the shortcut icon or at a badge location of the shortcut icon. For example, when the target parameter includes the permanent expiration time of the shortcut icon, for a shortcut icon that needs to be removed when the permanent expiration time is reached, a countdown animation may be played in a specified time period before the permanent expiration time, to remind the user. For another example, for a shortcut icon that is displayed in a specified time period or periodically, a countdown animation may also be played in a specified time period before the specified time period ends or a cycle ends, to remind the user. Optionally, to avoid interference caused by long-term display of animation or video effect to the user, when the display style of the shortcut icon includes the animation or the video, the display condition of the shortcut icon may be set to a short time period, or the display condition of the shortcut icon may be set to that the shortcut icon runs on the desktop for the first time. In addition, the display style of the shortcut icon may be further used to implement animation definitions such as shortcut icon blinking, shortcut icon color change, and shortcut icon shape change, which may also attract eyes of the user and remind the user.

The behavior definition corresponding to the shortcut icon may be an operation performed by the terminal device triggered after the user taps the shortcut icon. For example, after the user taps the shortcut icon, the terminal device displays the target page corresponding to the shortcut icon on the display. Alternatively, after the user taps the shortcut icon, the terminal device starts a tool or a function in the application corresponding to the shortcut icon. Specifically, for example, after the user taps the shortcut icon, the terminal device may enable a "recognize a song by listening to music" function in a music application.

The display location of the shortcut icon may be, for example, a first screen or a leftmost screen of the terminal device. Alternatively, the display location of the shortcut icon may be a notification bar or a navigation bar of the terminal device. Alternatively, the terminal device may be used as a master device, and the display location of the shortcut icon may be a display screen of another slave device. For example, the another slave device may be a wearable device, and the terminal device may create the shortcut icon and control the shortcut icon to be displayed on a screen of the wearable device. To be specific, during implementation, a display location parameter of the shortcut icon may be flexibly configured, to flexibly implement display of the shortcut icon.

The display status of the shortcut icon may indicate whether to display the shortcut icon. The shortcut icon management module may manage display of the shortcut icon by updating the display status of the shortcut icon. For example, if the display condition of the shortcut icon is that the shortcut icon is displayed when the user does not perform a sign-in operation on the target page every day, when the user has completed the sign-in operation, the shortcut icon management module may update the display status of the shortcut icon to be "not displayed" in a time period from time when the user completes the sign-in operation to 0:00 on the next day.

It should be noted that the target parameter may include at least one of the foregoing parameters. During specific implementation, a data structure of the target parameter may be implemented in a plurality of manners. For example, the target parameter may include at least one display condition and a display parameter corresponding to each display condition. For another example, the target parameter may directly include each of the foregoing parameters. In other words, during implementation, the data structure of the target parameter may be flexibly adjusted based on an actual application scenario. This is not limited in this embodiment of this application.

S602: The application sends the target parameter to the shortcut icon management module.

S603: The shortcut icon management module creates and displays the shortcut icon when determining that the display condition is satisfied, or when determining that the display condition is not satisfied, removes the shortcut icon or displays prompt information used to remind the user to remove the shortcut icon.

Optionally, the shortcut icon management module may perform shortcut icon management based on the target parameter. Specifically, shortcut icon management includes processing such as shortcut icon creation, display, update, and removal. Shortcut icon update means that the shortcut icon management module creates a new shortcut icon based on the target parameter to replace a currently displayed shortcut icon.

The shortcut icon management module may determine the display condition of the shortcut icon, the display parameter of the shortcut icon, and the like based on the target parameter, and when determining that the display condition is satisfied, create and display the shortcut icon.

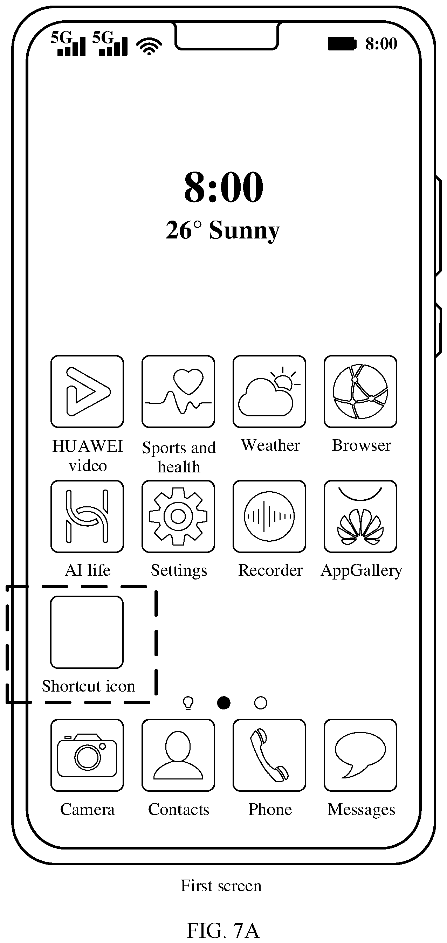

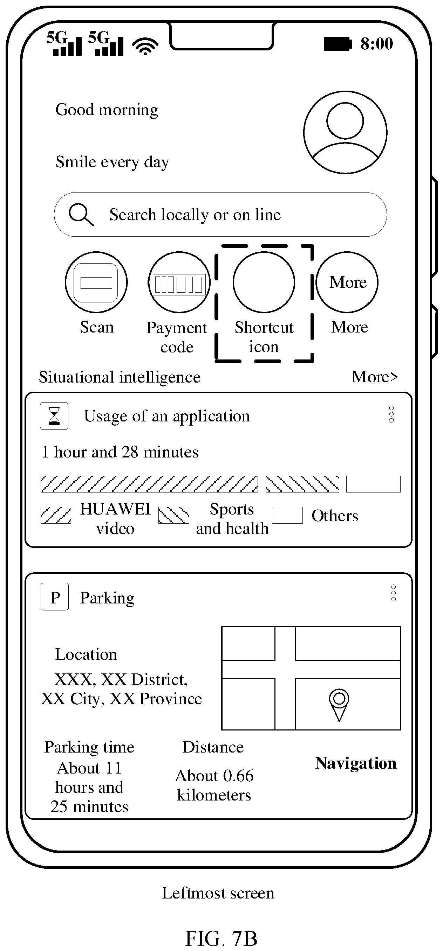

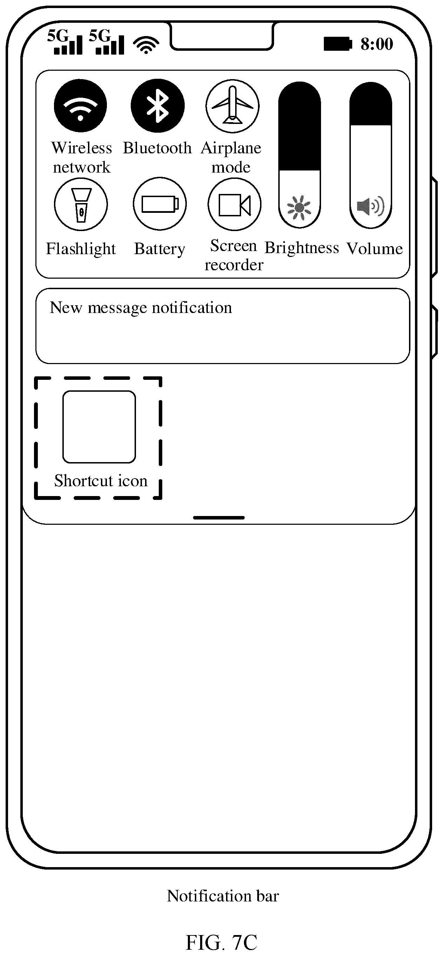

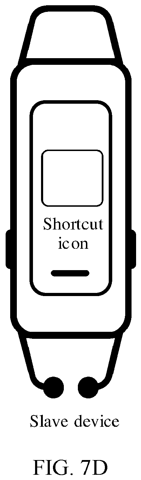

FIG. 7A to FIG. 7D are a schematic diagram of the display location of the shortcut icon according to an embodiment of this application. Refer to FIG. 7A to FIG. 7D. The shortcut icon management module may display the shortcut icon on the first screen, the leftmost screen, and the notification bar of the terminal device, and a screen of a slave device of the terminal device. In FIG. 7A to FIG. 7D, an example in which the slave device of the terminal device is a wearable device is used.

In addition, the shortcut icon management module may further pre-configure some shortcut icon display rules. To be specific, the shortcut icon management module can also provide some unified shortcut icon display framework capabilities. For example, when the display condition of the shortcut icon is a time period, the shortcut icon management module may create a countdown badge, a clock progress pie chart, or another identifier on the shortcut icon within specified time before expiration time when creating such a shortcut icon.

In a process of displaying the shortcut icon, the shortcut icon management module may further monitor the shortcut icon based on the display condition of the shortcut icon. For example, when the display condition of the shortcut icon is that the shortcut icon is displayed when the user does not perform a sign-in operation on the target page every day, the shortcut icon management module removes the shortcut icon after receiving an indication message sent by the application to indicate that the user has completed the sign-in operation.

Optionally, before expiration of the shortcut icon, the shortcut icon management module may further display the prompt information to prompt the user that the shortcut icon is about to expire, for example, display the prompt information in the notification bar, to prompt the user to tap the shortcut icon to complete an operation within a specified time period, or prompt the user about a countdown of the activity page corresponding to the shortcut icon.

When determining that the display condition is not satisfied, the shortcut icon management module may automatically remove the shortcut icon, or may display the prompt information used to remind the user to remove the shortcut icon. For example, the prompt information may be displayed in the notification bar, or the prompt information may be displayed in a pop-up window. The prompt information may be information for asking the user whether the shortcut icon can be removed. After the user authorizes removal of the shortcut icon, the shortcut icon management module removes the shortcut icon.

When the shortcut icon management module monitors the shortcut icon, based on different display conditions of the shortcut icon, the shortcut icon management module may independently monitor the display status of the shortcut icon, or the shortcut icon management module may further monitor the shortcut icon based on the user data fed back by the application. For example, when the display condition of the shortcut icon is time when the shortcut icon needs to be displayed, the shortcut icon management module may monitor the shortcut icon based on current time and a time period during which the shortcut icon needs to be displayed, and does not need to obtain the user data fed back by the application. When the display condition of the shortcut icon is the specified condition corresponding to the user data, the shortcut icon management module may monitor the shortcut icon based on the user data sent by the application and the specified condition corresponding to the user data.

It should be noted that, in some application scenarios, after authorized, the shortcut icon management module may obtain the user data, and the application does not need to send the user data to the shortcut icon management module. In this case, when the display condition of the shortcut icon is the specified condition corresponding to the user data, the shortcut icon management module may also independently monitor the shortcut icon. For example, after the shortcut icon management module is authorized by the application, the target parameter sent by the application to the shortcut icon management module may further include the user data query address link. The shortcut icon management module may query the user data based on the user data query address link, for example, query whether the user completes a sign-in operation. Therefore, the shortcut icon management module may also monitor the shortcut icon when the application does not need to send the user data.

In an optional implementation, the target parameter received by the shortcut icon management module may include at least one display condition and a display parameter corresponding to each display condition. For example, the display condition of the shortcut icon may be display time. The shortcut icon management module may receive display parameters corresponding to a plurality of different display time periods. When creating and displaying the shortcut icon, the shortcut icon management module may determine, based on the current time, which display parameter is used to create the shortcut icon. In this case, after receiving the target parameter, the shortcut icon management module may perform processing such as shortcut icon creation, displaying, updating, and removal for a plurality of times based on display parameters corresponding to different display conditions. For example, the plurality of display conditions may be different display time periods, and behavior definitions of the shortcut icon in each group of display parameters are different display pages. The shortcut icon management module may monitor in real time a display time period in which the current time is located, and update the shortcut icon based on behavior definitions of the shortcut icon in display parameters corresponding to different display time periods. Therefore, after the user taps the shortcut icon at different time, different display pages may be displayed on the display of the terminal device.

Certainly, it can be learned from the foregoing description of the display condition of the shortcut icon that the display condition of the shortcut icon may be a periodic condition. For example, the display condition of the shortcut icon is that the shortcut icon is displayed in a specified time period of each day. After receiving the target parameter, the shortcut icon management module may create and display the shortcut icon every day based on the target parameter, and remove the shortcut icon after determining that the specified time period ends. In this case, the shortcut icon management module may also perform shortcut icon creation, displaying, updating, and removal processing for a plurality of times based on one target parameter.

Optionally, when removing the shortcut icon, the shortcut icon management module may further request the application to obtain a new target parameter, to create and display the shortcut icon next time. For a manner in which the application obtains the new target parameter, refer to the manner in which the application obtains the target parameter in S601. Details are not repeated.

It may be understood that, in some application scenarios, the shortcut icon management module of the terminal device may directly obtain the target parameter, and the application does not need to obtain the target parameter and then forward the target parameter to the shortcut icon management module. In other words, the shortcut icon display method provided in this embodiment of this application may alternatively be independently implemented by the shortcut icon management module in the terminal device. The shortcut icon display method implemented through interaction between the shortcut icon management module and the application in FIG. 6 or the shortcut icon display method implemented by the shortcut icon management module is a possible implementation in this embodiment of this application, and does not constitute a limitation on specific implementation of the shortcut icon display method provided in this embodiment of this application.

The following further describes, with reference to several specific application scenarios, the shortcut icon display manner provided in this embodiment of this application. Certainly, the following examples are merely several example implementations of the shortcut icon display method provided in this application, and do not constitute a limitation on the shortcut icon display manner and the application scenario of the shortcut icon display manner provided in this embodiment of this application.

### Example 1

Some pages in the application on the terminal device, such as an activity page, expire at specified expiration time. Such a display page is a page accessible by the user in a period of time, and the user cannot access the page after specified time is reached.

The user triggers, on the activity page of the application, an instruction to create a shortcut icon. The application obtains a target parameter of the shortcut icon from the server. The target parameter obtained by the application may include a display condition and a display parameter of the shortcut icon corresponding to the activity page. Specifically, the display condition of the shortcut icon may be expiration time of the shortcut icon. For example, the expiration time may be end time of an activity corresponding to the activity page in the application.

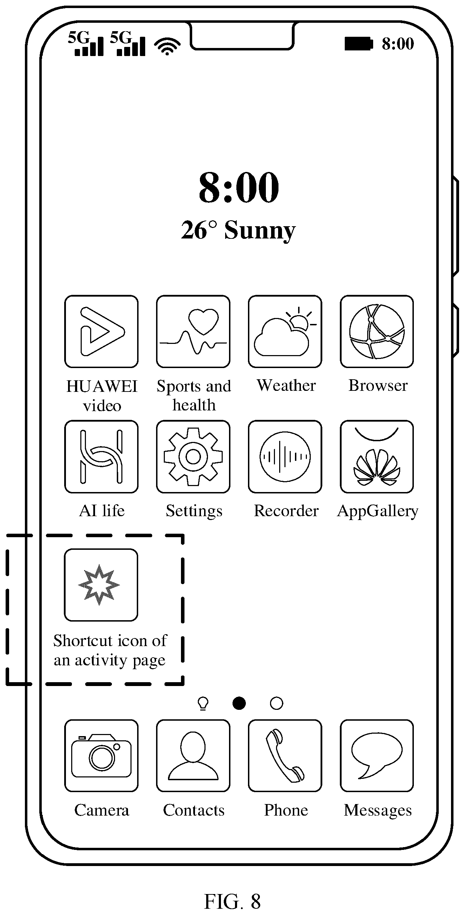

The application sends the obtained target parameter to the shortcut icon management module. The shortcut icon management module may create the shortcut icon based on the display parameter in the target parameter. A display location of the shortcut icon included in the display parameter is the first screen of the terminal device. Refer to FIG. 8. The terminal device creates the shortcut icon based on a display style of the shortcut icon in the display parameter, and displays the shortcut icon on the first screen.

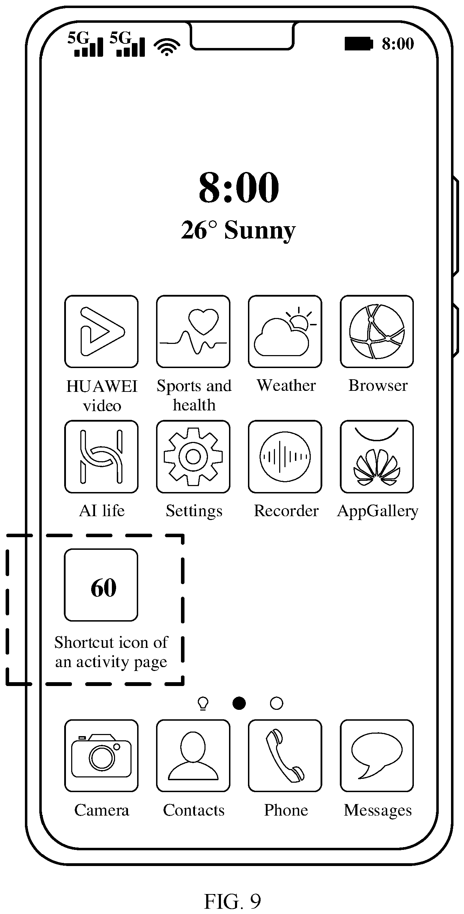

For example, the target parameter sent by the application and received by the shortcut icon management module may further include a display condition that is one minute before the expiration time of the shortcut icon. The target parameter may further include a display parameter corresponding to the display condition. The display style of the shortcut icon in the display parameter is displaying a one-minute countdown animation on the shortcut icon. FIG. 9 is a schematic diagram of displaying the shortcut icon on the first screen of the terminal device. When the shortcut icon management module determines that current time is one minute before the expiration time of the shortcut icon, the shortcut icon shown in FIG. 9 is created and displayed based on the display parameter. Because display effect of the shortcut icon is a one-minute countdown, the user may be reminded that the activity page corresponding to the shortcut icon is about to expire. Therefore, user experience is improved.

### Example 2

The application on the terminal device may display different activity pages in a plurality of activity cycles. For example, for an activity that lasts for five days, activity pages provided in the application each day are different.

The user triggers, on the activity page of the application, an instruction to create a shortcut icon. The application obtains a target parameter of the shortcut icon from the server. The target parameter obtained by the application may include a display condition of the shortcut icon. For example, the display condition of the shortcut icon may be a time cycle for displaying the shortcut icon. The target parameter may further include a display parameter, for example, a name of the shortcut icon, a display style of the shortcut icon, and a behavior definition of the shortcut icon, which correspond to each time cycle.

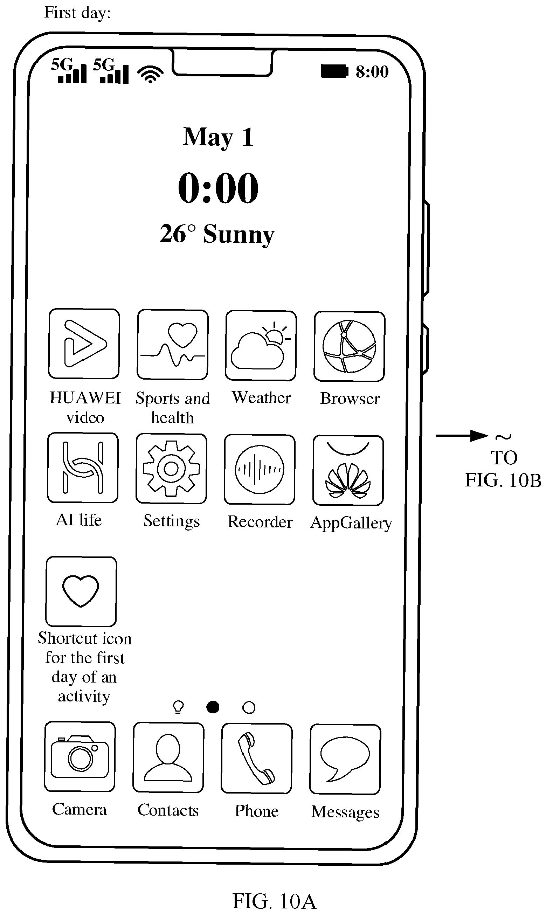

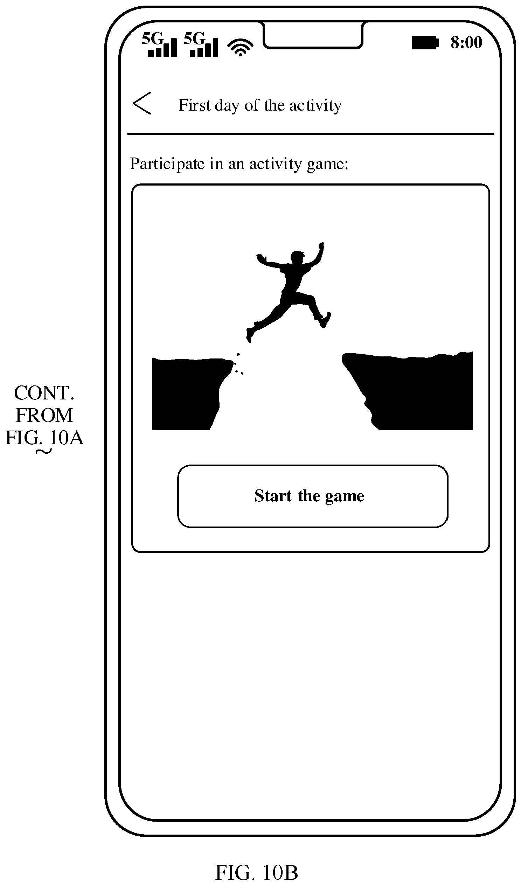

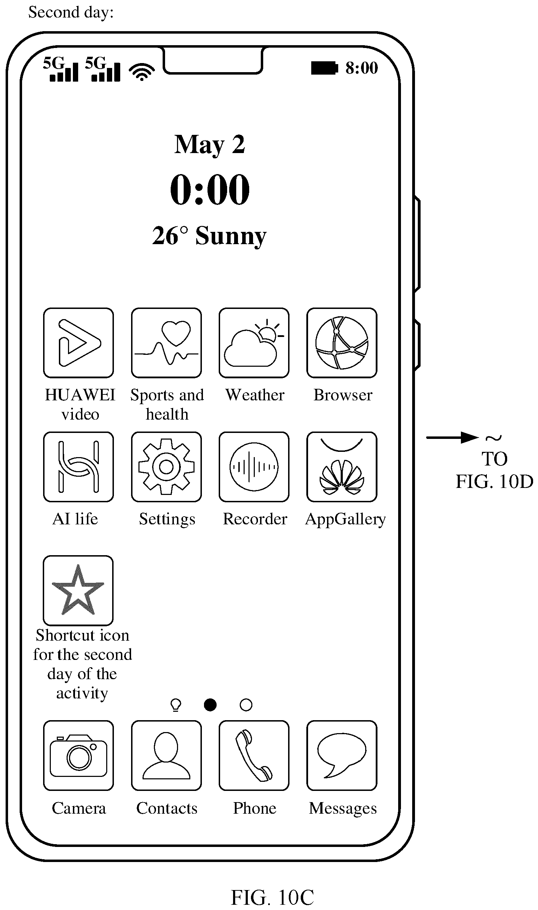

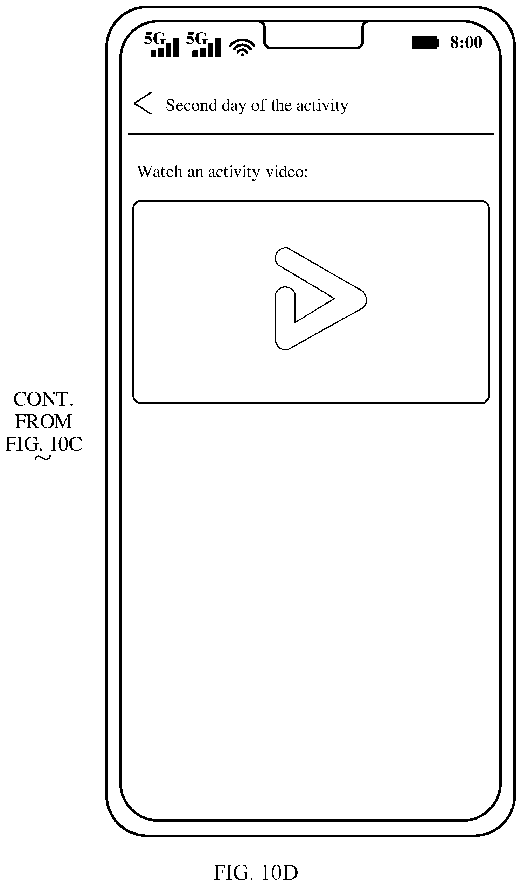

After receiving the target parameter sent by the application, the shortcut icon management module determines the time cycle for displaying the shortcut icon. For example, it is determined that the time cycle for displaying the shortcut icon is every day. In this case, the shortcut icon is created at 0:00 every day based on a name of the shortcut icon, a display style of the shortcut icon, and a behavior definition of the shortcut icon that correspond to the day and that are in the target parameter, and is displayed on the display of the terminal device. In addition, the shortcut icon is updated at 0:00 on the next day based on a name of the shortcut icon, a display style of the shortcut icon, and a behavior definition of the shortcut icon, which correspond to the next day and which are in the target parameter. For example, FIG. 10A to FIG. 10D are a schematic diagram of displaying different shortcut icons by the terminal device on a first day and a second day. Refer to FIG. 10A to FIG. 10D. After the user taps the shortcut icon in different time cycles, the terminal device may display different pages based on behavior definitions of the shortcut icon corresponding to the different time cycles. For example, as shown in FIG. 10A to FIG. 10D, after the user taps the shortcut icon on the first day of the activity, the terminal device displays a page for the first day of the activity, for example, an activity game page. After the user taps the shortcut icon on the second day of the activity, the terminal device displays a page for the second day of the activity, for example, an activity video page. According to the method, the terminal device may create shortcut icons of different display styles under different display conditions, and after the user taps the shortcut icons, different pages may be displayed through jumping based on the different display conditions. Therefore, practicability of the shortcut icon is improved.

### Example 3

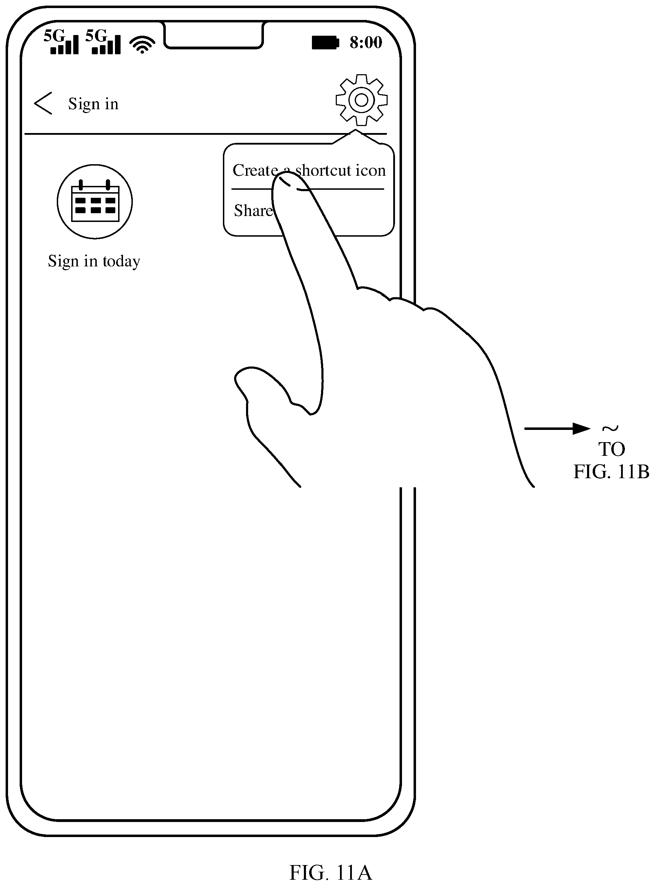

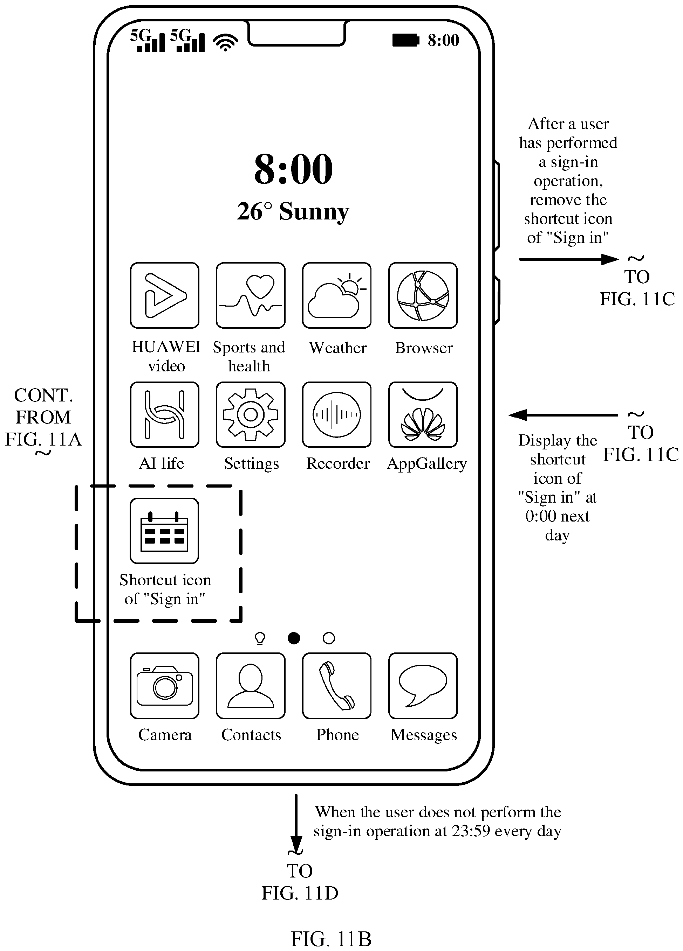

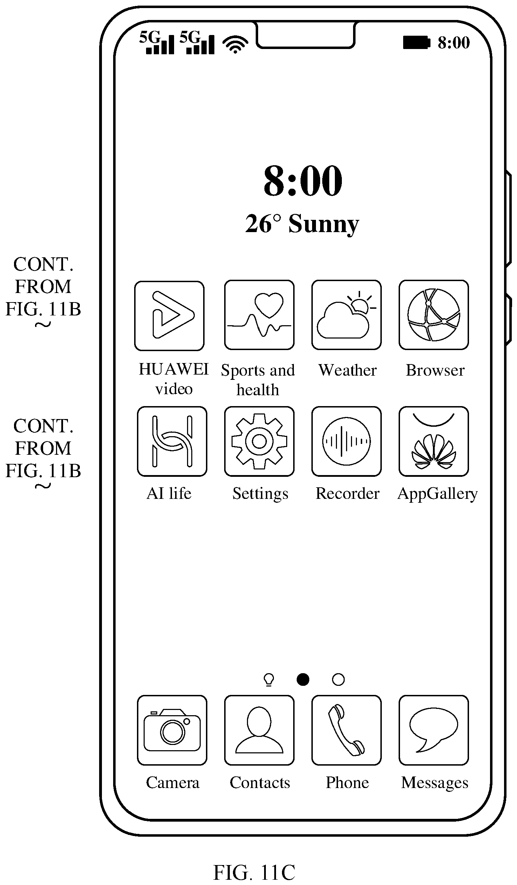

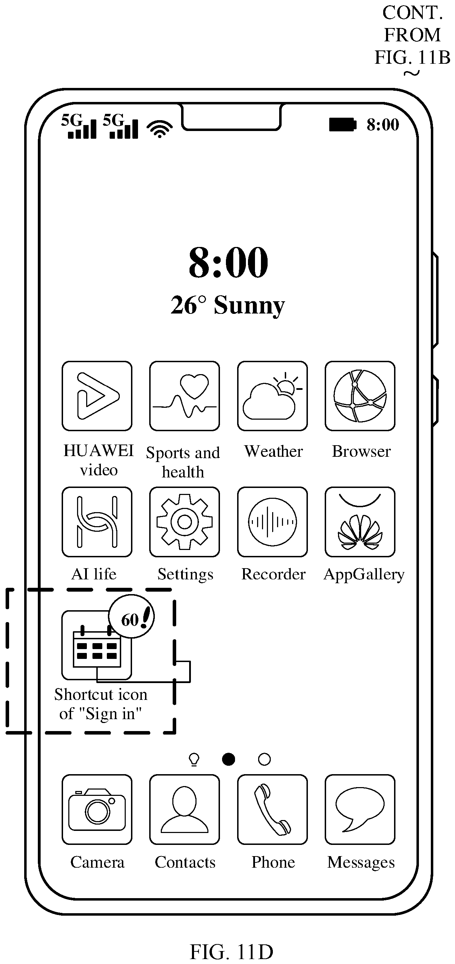

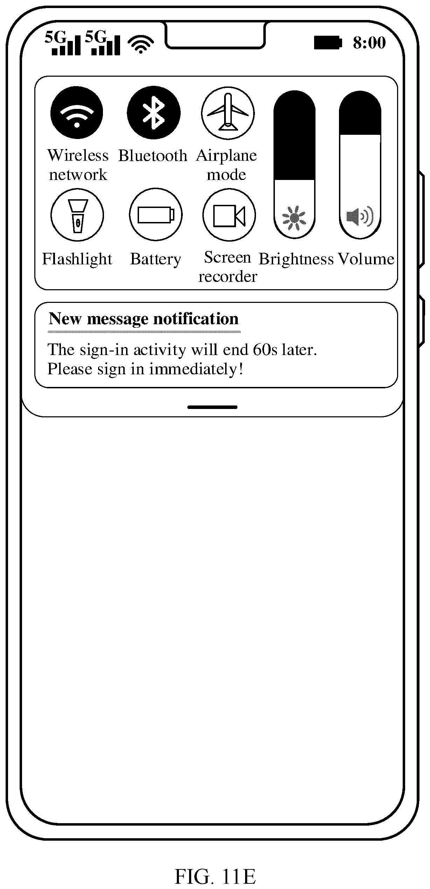

The application on the terminal device supports a function that requires the user to access or perform an interactive operation at a fixed interval, for example, "Sign in". FIG. 11A to FIG. 11E are a schematic diagram of an activity page of "Sign in" in the application. To help the user enter the page to perform a sign-in activity, the user may tap "Create a shortcut icon" on the page shown in FIG. 11A, to trigger an instruction to create a shortcut icon on the activity page of "Sign in". In response to the instruction of creating the shortcut icon triggered by the user, the application may obtain, from the server, a target parameter of the shortcut icon corresponding to the activity page "Sign in". For example, the target parameter may include a display parameter, for example, a display condition of the shortcut icon, a name of the shortcut icon, and a display style of the shortcut icon.

The application sends the obtained target parameter to the shortcut icon management module. The shortcut icon management module determines that the display condition of the shortcut icon in the target parameter is that the shortcut icon is displayed every day before the user performs a sign-in operation. Refer to FIG. 11A to FIG. 11E. The shortcut icon management module creates and displays, based on the display parameter, the shortcut icon corresponding to the activity page of "Sign in". The shortcut icon management module monitors the shortcut icon. After receiving an indication message sent by the application to indicate that the user has completed the sign-in operation, the shortcut icon management module removes the shortcut icon. The shortcut icon management module may create and display a shortcut icon again at 0:00 the next day based on the display parameter.

Optionally, the target parameter may further include, for example, a display parameter of the shortcut icon from 23:59 to 24:00 every day. When determining, at 23:59 every day, that no indication message sent by the application to indicate that the user has completed the sign-in operation is received, the shortcut icon management module may update the shortcut icon based on the display parameter of the shortcut icon in the target parameter from 23:59 to 24:00 every day, and may further display prompt information for reminding the user of a countdown of the activity page of "Sign in". For example, the display style of the shortcut icon from 23:59 to 24:00 every day further includes a countdown animation displayed on the shortcut icon. Refer to FIG. 11A to FIG. 11E. The terminal device may update and display, at 23:59 every day, a shortcut icon with a countdown animation, and may display, in the notification bar, prompt information for reminding the user of a countdown on the activity page of "Sign in", to remind the user to perform the sign-in operation.

### Example 4

Display pages of some functions or tools in the application on the terminal device change with current time and a geographical location of the terminal device. For example, traffic cards of different cities may be displayed in the application. In this case, locations of the terminal device are different, and content displayed on a page displayed when the user taps a traffic card function in the application is different.

The user triggers, by using a voice input control instruction, an instruction to create a shortcut icon corresponding to a traffic card function. The application obtains a target parameter of the shortcut icon. The target parameter may include a plurality of display conditions and a display parameter corresponding to each display condition. Behavior definitions of the shortcut icon in the display parameters corresponding to the display conditions are different. Specifically, display conditions of the shortcut icon in each group of target parameters are different geographical locations, and behavior definitions of the shortcut icon in the display parameters corresponding to the display conditions are different traffic card pages.

The application sends the obtained target parameter to the shortcut icon management module. The shortcut icon management module determines a current geographical location, determines a corresponding display parameter based on the current geographical location, creates the shortcut icon based on the determined display parameter, and displays the shortcut icon on the home screen.

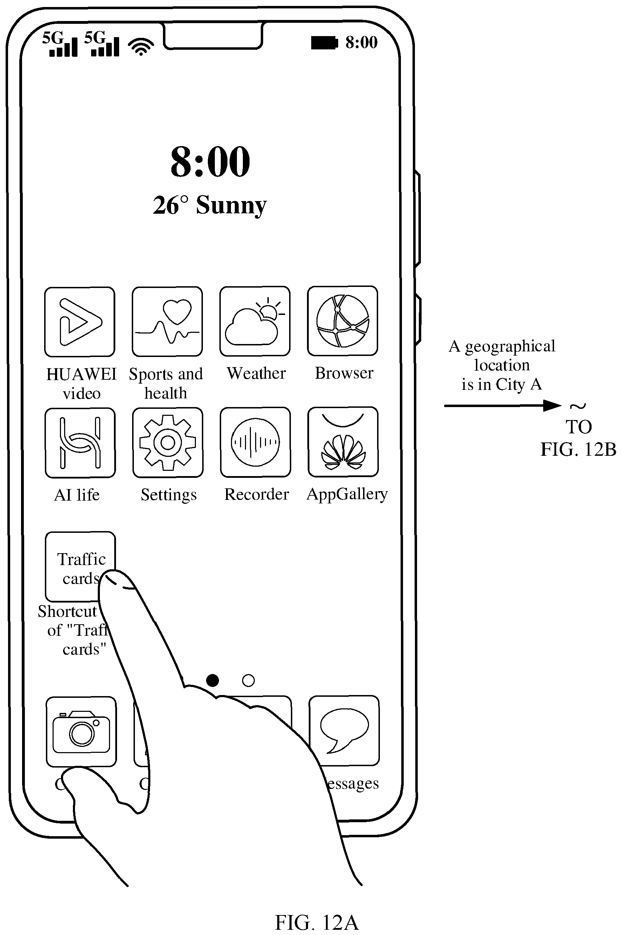

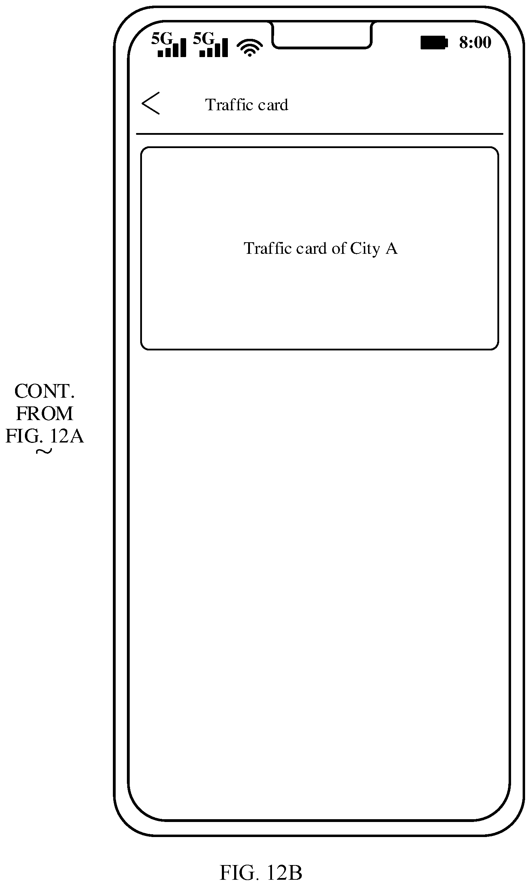

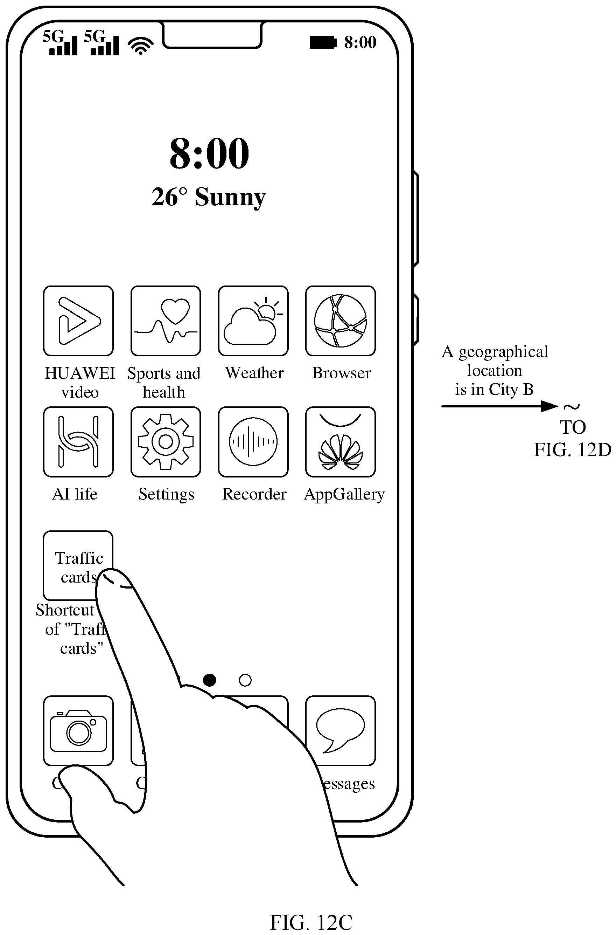

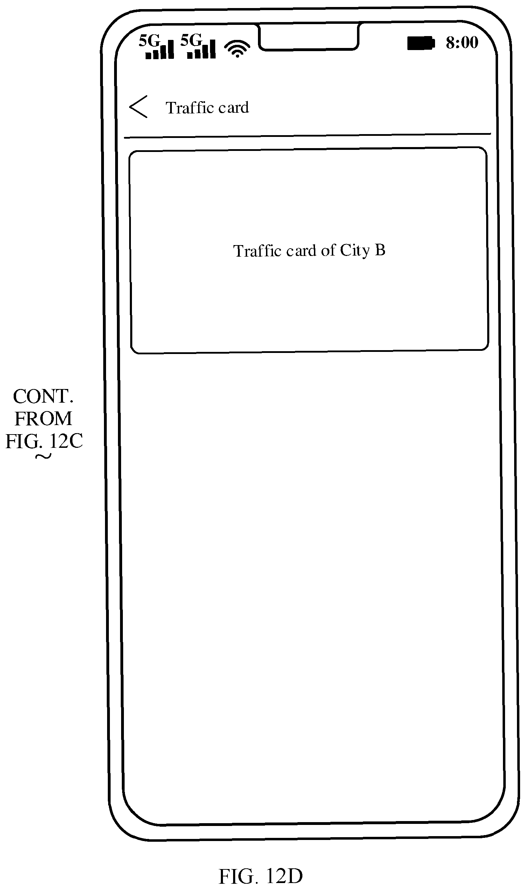

When determining that the current geographical location changes, the terminal device may re-determine a display parameter corresponding to the current geographical location, create a shortcut icon based on the re-determined display parameter, and replace the shortcut icon originally displayed on the first screen, to complete shortcut icon updating. For example, as shown in FIG. 12A to FIG. 12D, when the terminal device is located at different geographical locations, traffic card pages of different regions can be displayed on the display of the terminal device after the user taps the shortcut icon. According to the method, the shortcut icon applicable to the current geographical location can be flexibly created, so that user experience of using the shortcut icon is improved.

### Example 5

A membership point function is provided in the application of the terminal device. The user may perform a specified operation in the application to obtain membership points, for example, complete a game or a task in the application to obtain membership points. The user may trigger an instruction to create a shortcut icon on a membership point page. The application obtains a target parameter of the shortcut icon corresponding to the membership point page. For example, the target parameter may include a display parameter, for example, a display condition of the shortcut icon, a name of the shortcut icon, and a display style of the shortcut icon.

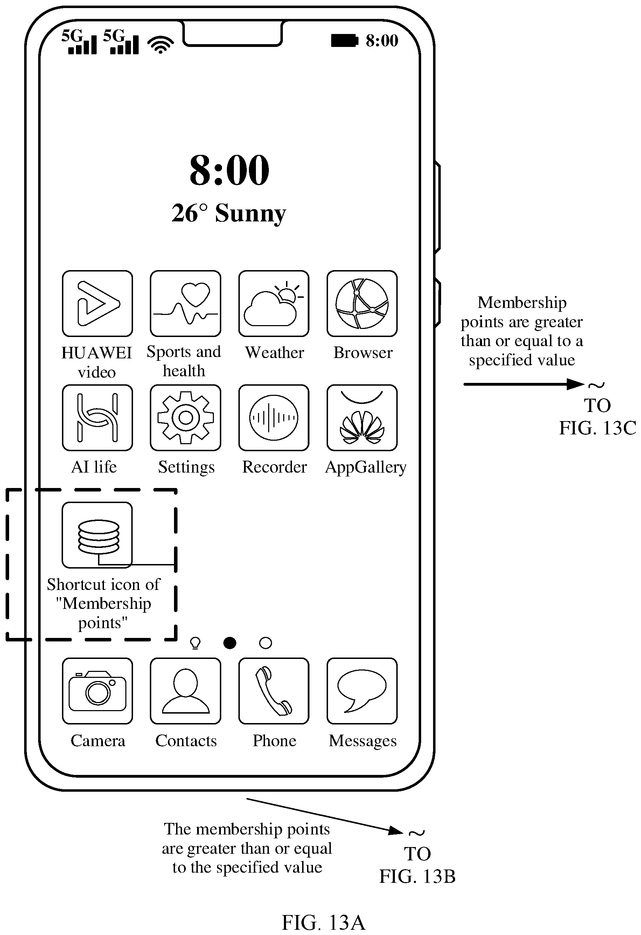

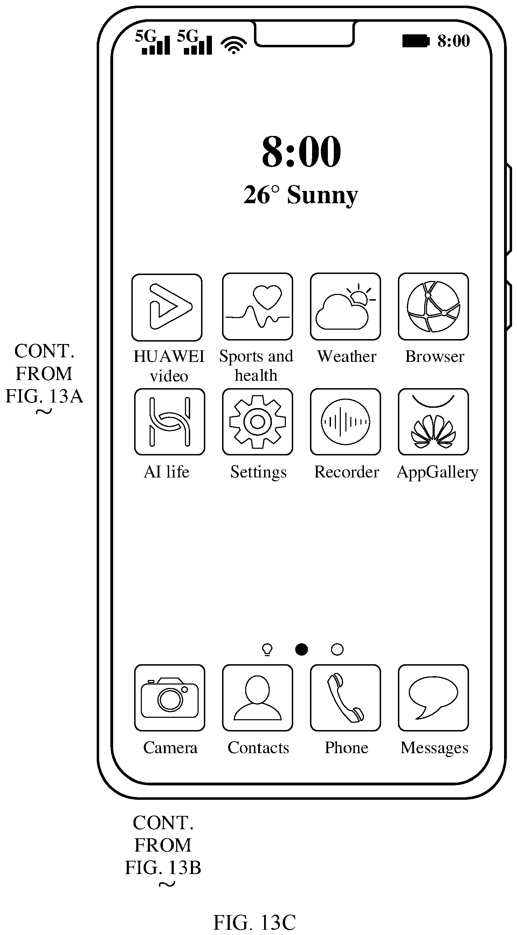

The application sends the obtained target parameter to the shortcut icon management module. The shortcut icon management module determines that the display condition of the shortcut icon in the target parameter is that the shortcut icon is displayed when membership points of the user are less than a specified value. Refer to FIG. 13A to FIG. 13C. The shortcut icon management module creates and displays the shortcut icon based on the target parameter. After receiving an indication message sent by the application to indicate that the membership points of the user are greater than or equal to the specified value, the shortcut icon management module removes the shortcut icon.

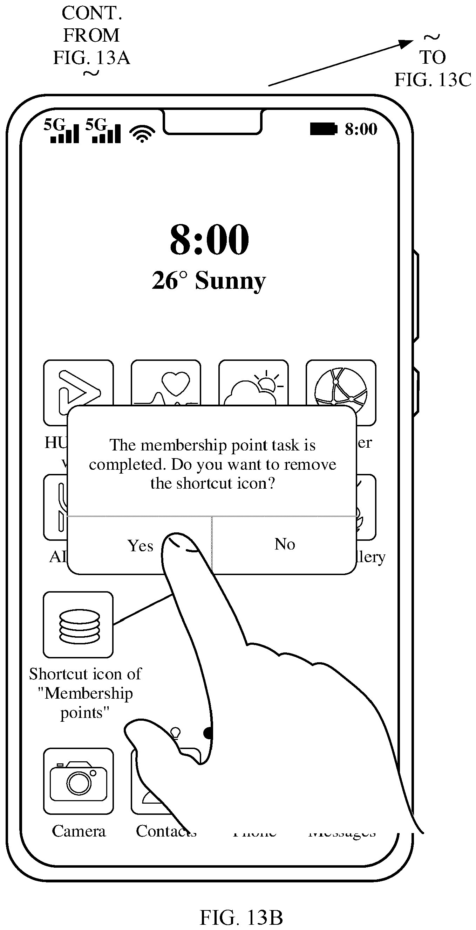

Optionally, after receiving the indication message sent by the application to indicate that the membership points of the user are greater than or equal to the specified value, the shortcut icon management module may automatically remove the shortcut icon, or may display prompt information to ask the user whether the shortcut icon can be removed. For example, refer to FIG. 13B. A pop-up window displays the prompt information, where the prompt information may be, for example, "The membership point task is completed. Do you want to remove the shortcut icon?". The user taps a "Yes" button. After the user authorizes removal of the shortcut icon, the shortcut icon management module removes the shortcut icon.

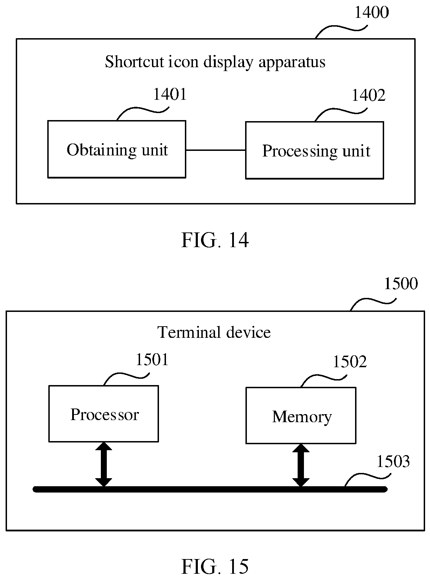

Based on a same inventive concept, this application further provides a shortcut icon display apparatus 1400. The shortcut icon display apparatus 1400 may be used in the terminal device in the scenario shown in FIG. 5. FIG. 14 is a schematic diagram of a structure of the shortcut icon display apparatus. The shortcut icon display apparatus 1400 includes an obtaining unit 1401 and a processing unit 1402. The following describes functions of the units in the shortcut icon display apparatus 1400.

The obtaining unit 1401 is configured to: in response to an instruction of creating a shortcut icon triggered by a user, obtain a display condition of the shortcut icon.

The processing unit 1402 is configured to: when the display condition is satisfied, create and display the shortcut icon; or when the display condition is not satisfied, remove the shortcut icon or display prompt information used to remind the user to remove the shortcut icon.

In an implementation, the display condition includes at least one of the following: a time parameter for displaying the shortcut icon, a geographical location parameter for displaying the shortcut icon, and a specified condition corresponding to user data during display of the shortcut icon.

In an implementation, the time parameter for displaying the shortcut icon includes a time point for displaying the shortcut icon, a time period for displaying the shortcut icon, or a time cycle for displaying the shortcut icon.

In an implementation, when the display condition includes the time parameter for displaying the shortcut icon, when determining that the display condition is satisfied, the processing unit 1402 is specifically configured to determine that current time reaches the time point for displaying the shortcut icon, or determine that current time is within the time period or the time cycle for displaying the shortcut icon.

In an implementation, when the display condition includes the geographical location parameter for displaying the shortcut icon, when determining that the display condition is satisfied, the processing unit 1402 is specifically configured to determine that a current geographical location of the terminal device is within a geographical region corresponding to the geographical location parameter.

In an implementation, when the display condition includes the specified condition corresponding to the user data during display of the shortcut icon, when determining that the display condition is satisfied, the processing unit 1402 is specifically configured to: obtain the user data, and determine that the user data satisfies the specified condition corresponding to the user data.

In an implementation, when obtaining the display condition of the shortcut icon, the obtaining unit 1401 is specifically configured to: obtain a preset display condition of the shortcut icon; generate the display condition according to a setting instruction input by the user; or send a request message to a server, and receive the display condition returned by the server.

In an implementation, when creating and displaying the shortcut icon, the processing unit 1402 is specifically configured to: obtain a display parameter of the shortcut icon, and create and display the shortcut icon based on the display parameter.

In an implementation, when obtaining a display parameter of the shortcut icon, the obtaining unit 1401 is specifically configured to: obtain a preset display parameter of the shortcut icon; generate the display parameter according to a setting instruction entered by the user; or send a request message to a server, and receive the display parameter returned by the server.

In an implementation, the display parameter includes at least one of the following content: an identifier of the shortcut icon, a name of the shortcut icon, a display style of the shortcut icon, a behavior definition of the shortcut icon, a display location of the shortcut icon, and a display status of the shortcut icon. The behavior definition of the shortcut icon indicates a function enabled or a page displayed after the shortcut icon is triggered.

In an implementation, the display style of the shortcut icon includes at least one of the following content: a size, a shape, a color, an animation, and a video of the shortcut icon.

In an implementation, the processing unit 1402 is further configured to: when the display condition is time for displaying the shortcut icon, and the display style of the shortcut icon includes a countdown animation, display the countdown animation on the shortcut icon within specified duration before end time corresponding to the shortcut icon. The time for displaying the shortcut icon includes the end time corresponding to the shortcut icon. The specified duration is duration of the countdown animation.

This application further provides a terminal device 1500. FIG. 15 is a schematic diagram of a structure of the terminal device 1500 according to an embodiment of this application. The terminal device 1500 may be the terminal device in the scenario shown in FIG. 5. Refer to FIG. 15. The terminal device 1500 includes a processor 1501, a memory 1502, and a bus 1503. The processor 1501 and the memory 1502 communicate through the bus 1503, or may communicate in another manner, for example, wireless transmission. The memory 1502 is configured to store instructions. The processor 1501 is configured to execute the instructions stored in the memory 1502. The memory 1502 is configured to store program code. The processor 1501 may invoke the program code stored in the memory 1502 to perform the following operations:
in response to an instruction of creating a shortcut icon triggered by a user, obtaining a display condition of the shortcut icon; and when the display condition is satisfied, creating and displaying the shortcut icon; or when the display condition is not satisfied, removing the shortcut icon or displaying prompt information used to remind the user to remove the shortcut icon.

In an implementation, the display condition includes at least one of the following: a time parameter for displaying the shortcut icon, a geographical location parameter for displaying the shortcut icon, and a specified condition corresponding to user data during display of the shortcut icon.

In an implementation, the time parameter for displaying the shortcut icon includes a time point for displaying the shortcut icon, a time period for displaying the shortcut icon, or a time cycle for displaying the shortcut icon.

In an implementation, when the display condition includes the time parameter for displaying the shortcut icon, when determining that the display condition is satisfied, the processor 1501 is specifically configured to determine that current time reaches the time point for displaying the shortcut icon, or determine that current time is within the time period or the time cycle for displaying the shortcut icon.

In an implementation, when the display condition includes the geographical location parameter for displaying the shortcut icon, when determining that the display condition is satisfied, the processor 1501 is specifically configured to determine that a current geographical location of the terminal device is within a geographical region corresponding to the geographical location parameter.

In an implementation, when the display condition includes the specified condition corresponding to the user data during display of the shortcut icon, when determining that the display condition is satisfied, the processor 1501 is specifically configured to: obtain the user data, and determine that the user data satisfies the specified condition corresponding to the user data.

In an implementation, when obtaining the display condition of the shortcut icon, the processor 1501 is specifically configured to: obtain a preset display condition of the shortcut icon; generate the display condition according to a setting instruction input by the user; or send a request message to a server, and receive the display condition returned by the server.

In an implementation, when creating and displaying the shortcut icon, the processor 1501 is specifically configured to: obtain a display parameter of the shortcut icon, and create and display the shortcut icon based on the display parameter.

In an implementation, when obtaining a display parameter of the shortcut icon, the processor 1501 is specifically configured to: obtain a preset display parameter of the shortcut icon; generate the display parameter according to a setting instruction entered by the user; or send a request message to a server, and receive the display parameter returned by the server.

In an implementation, the display parameter includes at least one of the following content: an identifier of the shortcut icon, a name of the shortcut icon, a display style of the shortcut icon, a behavior definition of the shortcut icon, a display location of the shortcut icon, and a display status of the shortcut icon. The behavior definition of the shortcut icon indicates a function enabled or a page displayed after the shortcut icon is triggered.

In an implementation, the display style of the shortcut icon includes at least one of the following content: a size, a shape, a color, an animation, and a video of the shortcut icon.

In an implementation, the processor 1501 is further configured to: when the display condition is time for displaying the shortcut icon, and the display style of the shortcut icon includes a countdown animation, display the countdown animation on the shortcut icon within specified duration before end time corresponding to the shortcut icon. The time for displaying the shortcut icon includes the end time corresponding to the shortcut icon. The specified duration is duration of the countdown animation.

It may be understood that the memory 1502 in FIG. 15 in this application may be a volatile memory or a non-volatile memory, or may include a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), which is used as an external cache. By way of example but not restrictive description, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It should be noted that the memory of the system and the method described in this specification includes but is not limited to these and any other proper type of memories.

Based on the foregoing embodiments, an embodiment of this application further provides a chip. The chip is configured to read a computer program stored in a memory, to implement the shortcut icon display method provided in the embodiment shown in FIG. 6.

Based on the foregoing embodiments, an embodiment of this application provides a chip system. The chip system includes a processor, configured to support a computer apparatus in implementing the shortcut icon display method provided in the embodiment shown in FIG. 6. In a possible design, the chip system further includes a memory. The memory is configured to store a program and data that are necessary for the computer apparatus. The chip system may include a chip, or may include a chip and another discrete device.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, and an optical memory) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams, or a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of the another programmable data processing device generate an apparatus configured to implement a specific function in one or more procedures in the flowcharts and/or in one or more blocks in the block diagrams.

These computer program instructions may alternatively be stored in a computer-readable memory capable of instructing a computer or another programmable data processing device to work in a specific manner, so that the instructions stored in the computer-readable memory generate an artifact that includes an instruction apparatus. The instruction apparatus implements a specified function in one or more processes in the flowcharts and/or in one or more blocks in the block diagrams.

The computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specified function in one or more processes in the flowcharts and/or in one or more blocks in the block diagrams.

It is clear that a person skilled in the art may make various modifications and variations to this application without departing from the protection scope of this application. This application is intended to cover these modifications and variations of this application provided that they fall within the scope defined by the claims of this application and their equivalent technologies.

## Claims

1. A shortcut icon display method, applied to a terminal device, wherein the method comprises:
in response to an instruction of creating a shortcut icon triggered by a user, obtaining a display condition of the shortcut icon; and
when the display condition is satisfied, creating and displaying the shortcut icon; or
when the display condition is not satisfied, removing the shortcut icon or displaying prompt information used to remind the user to remove the shortcut icon.

2. The method according to claim 1, wherein the display condition comprises at least one of the following:
a time parameter for displaying the shortcut icon, a geographical location parameter for displaying the shortcut icon, or a specified condition corresponding to user data during display of the shortcut icon.

3. The method according to claim 2, wherein the time parameter for displaying the shortcut icon comprises a time point for displaying the shortcut icon, a time period for displaying the shortcut icon, or a time cycle for displaying the shortcut icon.

4. The method according to claim 3, wherein when the display condition comprises the time parameter for displaying the shortcut icon, determining that the display condition is satisfied comprises:
determining that current time reaches the time point for displaying the shortcut icon; or
determining that current time is within the time period or the time cycle for displaying the shortcut icon.

5. The method according to claim 2, wherein when the display condition comprises the geographical location parameter for displaying the shortcut icon, determining that the display condition is satisfied comprises:
determining that a current geographical location of the terminal device is within a geographical region corresponding to the geographical location parameter.

6. The method according to claim 2, wherein when the display condition comprises the specified condition corresponding to the user data during display of the shortcut icon, determining that the display condition is satisfied comprises:
obtaining the user data, and determining that the user data satisfies the specified condition corresponding to the user data.

7. The method according to any one of claims 1 to 6, wherein the obtaining a display condition of the shortcut icon comprises:
obtaining a preset display condition of the shortcut icon;
generating the display condition according to a setting instruction input by the user; or
sending a request message to a server, and receiving the display condition returned by the server.

8. The method according to any one of claims 1 to 7, wherein the creating and displaying the shortcut icon comprises:
obtaining a display parameter of the shortcut icon, and creating and displaying the shortcut icon based on the display parameter.

9. The method according to claim 8, wherein the obtaining a display parameter of the shortcut icon comprises:
obtaining a preset display parameter of the shortcut icon;
generating the display parameter according to a setting instruction input by the user; or
sending a request message to a server, and receiving the display parameter returned by the server.

10. The method according to claim 8 or 9, wherein the display parameter comprises at least one of the following content:
an identifier of the shortcut icon, a name of the shortcut icon, a display style of the shortcut icon, a behavior definition of the shortcut icon, a display location of the shortcut icon, and a display status of the shortcut icon; and
the behavior definition of the shortcut icon indicates a function enabled or a page displayed after the shortcut icon is triggered.

11. The method according to claim 10, wherein the display style of the shortcut icon comprises at least one of the following content:
a size, a shape, a color, an animation, and a video of the shortcut icon.

12. The method according to claim 10 or 11, wherein when the display condition is time for displaying the shortcut icon, and the display style of the shortcut icon comprises a countdown animation, the method further comprises:
displaying the countdown animation on the shortcut icon within specified duration before end time corresponding to the shortcut icon, wherein
the time for displaying the shortcut icon comprises the end time corresponding to the shortcut icon, and the specified duration is duration of the countdown animation.

13. A terminal device, comprising at least one processor, wherein the at least one processor is coupled to at least one memory, and the at least one processor is configured to read a computer program stored in the at least one memory, to perform the method according to any one of claims 1 to 12.
